(19) Europäisches Patentamt / European Patent Office / Office européen des brevets

(11) **EP 2 039 095 B1**

(12) **FASCICULE DE BREVET EUROPEEN**

(45) Date de publication et mention de la délivrance du brevet:
**10.09.2014 Bulletin 2014/37**

(21) Numéro de dépôt: **07823574.4**

(22) Date de dépôt: **12.07.2007**

(51) Int Cl.:
*H04L 25/02* (2006.01)     *H04L 27/26* (2006.01)

(86) Numéro de dépôt international:
**PCT/FR2007/051653**

(87) Numéro de publication internationale:
**WO 2008/007030 (17.01.2008 Gazette 2008/03)**

(54) **Procédés d'émission et de réception d'un signal multiporteuse de type OFDM OQAM et pilotes correspondants**

Verfahren zum Senden und Empfangen eines Mehrträgersignals unter Durchführung einer Kanalschätzung sowie entsprechende Geräte und Computerprogramme

Methods for transmitting and receiving a multicarrier signal, carrying out a channel estimation, and corresponding devices and computer program products

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **12.07.2006 FR 0606375**
        **17.11.2006 FR 0610104**

(43) Date de publication de la demande:
**25.03.2009 Bulletin 2009/13**

(73) Titulaire: **Orange**
**75015 Paris (FR)**

(72) Inventeurs:
• **LELE, Chrislin**
**F-35136 Saint-jacques (FR)**
• **JAVAUDIN, Jean-Philippe**
**F-35000 Rennes (FR)**
• **LEGOUABLE, Rodolphe**
**F-35510 Cesson-sevigne (FR)**
• **SIOHAN, Pierre**
**F-RENNES 35200 (FR)**

(74) Mandataire: **Bioret, Ludovic et al**
**Cabinet Vidon**
**16 B, rue de Jouanet - B.P. 90333**
**35703 Rennes Cedex 07 (FR)**

(56) Documents cités:
**WO-A-02/25883     WO-A-02/25884**

• JAVAUDIN J-P ET AL: "Pilot-aided channel estimation for OFDM/OQAM" VTC 2003-SPRING. THE 57TH. IEEE SEMIANNUAL VEHICULAR TECHNOLOGY CONFERENCE. PROCEEDINGS. JEJU, KOREA, APRIL 22 - 25, 2003, IEEE VEHICULAR TECHNOLGY CONFERENCE, NEW YORK, NY : IEEE, US, vol. VOL. 3 OF 4. CONF. 57, 22 avril 2003 (2003-04-22), pages 1581-1585, XP002286312 ISBN: 0-7803-7757-5

**Description**

**1. Domaine de l'invention**

Le domaine de l'invention est celui de la transmission et de la diffusion d'informations numériques, notamment à haut débit, sur une bande de fréquence limitée.

Plus précisément, l'invention concerne une technique d'émission et de réception d'un signal à porteuses multiples permettant d'obtenir, en réception, une estimation du canal de transmission, par exemple en environnement radiomobile.

Notamment, la technique selon l'invention est bien adaptée à la transmission de signaux à porteuses multiples ayant subi une modulation de type OFDM/OQAM (en anglais « Orthogonal Frequency Division Multiplexing / Offset Quadrature Amplitude Modulation ») ou BFDM/OQAM (en anglais « Biorthogonal Frequency Division Multiplexing / OQAM »), pour lesquelles les porteuses sont mises en forme par une fonction prototype.

**2. Art antérieur**

**2.1 Les modulations multiporteuses**

*2.1.1 Les modulations OFDM*

On connaît à ce jour les modulations à porteuses multiples de type OFDM (en anglais « Orthogonally Frequency Division Multiplex»). Une telle technique de modulation apporte une solution efficace au problème de la diffusion d'informations, en particulier pour des canaux multi-trajets, filaires ou sans fil.

De ce fait, la technique de modulation multiporteuse OFDM a été retenue dans plusieurs normes et spécifications pour des applications en transmission filaires, par exemple de type ADSL (en anglais « Asymmetric Digital Subscriber Line ») ou PLC (en anglais « Powerline Communication », en français « courant porteur en ligne » ou CPL), ou sans fil, par exemple de type DAB (en anglais « Digital Audio Broadcasting »), DVB-T (en anglais « Digital Video Broadcasting - Terrestrial »), ou WLAN (en anglais « Wireless Local Area Network »).

Toutefois, la mise en forme rectangulaire d'un signal réalisée par un modulateur OFDM présente l'inconvénient d'une mauvaise localisation fréquentielle.

Par conséquent, des solutions alternatives ont été proposées, aboutissant à des systèmes de modulation à porteuses multiples dans lesquelles le signal est mis forme par des fonctions dites prototypes, permettant d'obtenir une meilleure localisation fréquentielle.

En effet, l'ensemble des porteuses d'une modulation multiporteuse forme un multiplex, et chacune des porteuses de ce multiplex peut être mise en forme à l'aide d'une même fonction prototype, notée g(t), qui caractérise la modulation multiporteuse.

*2.1.2 Les modulations OFDM/OQAM*

Ainsi, une solution proposée consiste à remplacer une modulation en quadrature QAM (« Quadrature Amplitude Modulation»), mise en oeuvre sur chacune des porteuses, par une modulation décalant d'un demi temps symbole les parties réelles et imaginaires des symboles complexes à transmettre, pour deux fréquences porteuses successives.

Cette alternance conduit à une modulation multiporteuse de type OFDM/OQAM. Cette approche permet notamment de réaliser les conditions d'orthogonalité désirées avec des filtres prototypes qui ne sont pas nécessairement de forme rectangulaire.

En effet, le décalage (offset temporel) introduit par la modulation OQAM permet de relâcher les contraintes d'orthogonalité, ou plus généralement de biorthogonalité. Cette famille de modulation offre ainsi un choix de fonctions prototypes plus large que la simple fonction prototype rectangulaire d'une modulation OFDM.

Ainsi, suivant le type de canal de transmission considéré pour une application donnée, comme par exemple le canal radiomobile ou le canal à courant porteur en ligne (CPL), on peut effectuer un choix de fonctions prototypes appropriées aux types de distorsions rencontrées. En particulier, il est préférable de retenir des fonctions prototypes présentant une meilleure sélectivité fréquentielle que le sinus cardinal utilisé en modulation OFDM, notamment en canal radiomobile pour lutter contre la dispersion fréquentielle due à l'effet Doppler, ou en canal CPL pour mieux résister aux brouilleurs à bande étroite, et de manière générale pour satisfaire plus aisément les spécifications fréquentielles des masques d'émission.

La modulation OFDM/OQAM est donc une alternative à la modulation OFDM classique, reposant sur un choix judicieux de la fonction prototype modulant chacune des porteuses du signal, qui doit être bien localisée dans l'espace temps/fréquence.

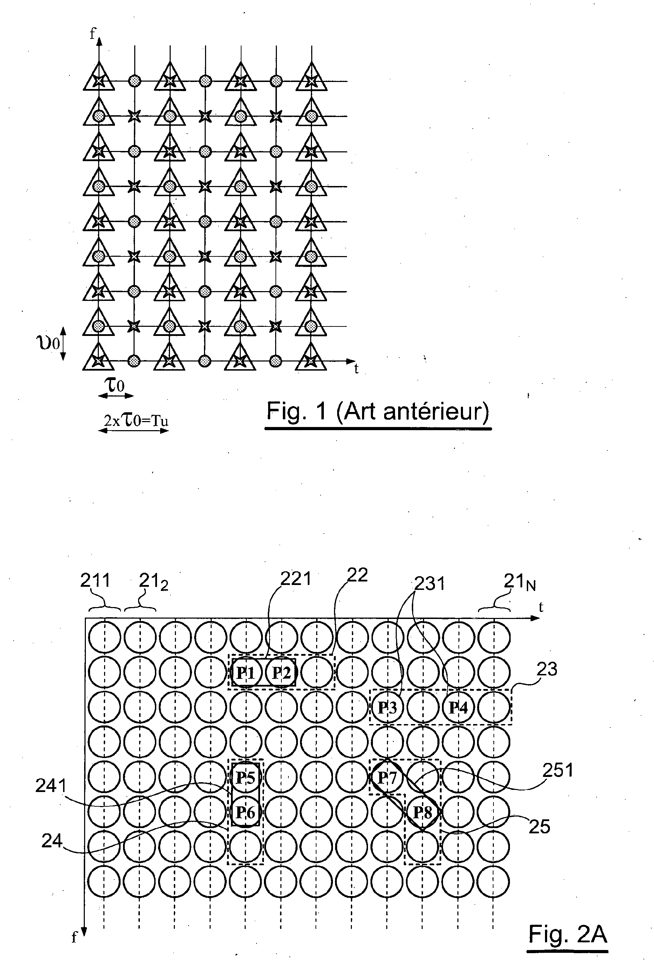

En particulier, la figure 1 illustre une représentation temps/fréquence des éléments de données à valeurs réelles transmis par modulation OFDM/OQAM et des éléments de données à valeurs complexes transmis par modulation OFDM classique, sans intervalle de garde, un symbole à valeurs complexes OFDM/QAM ou à valeurs réelles OFDM/OQAM étant constitué d'un ensemble d'éléments de données à un instant t donné. De plus, chaque emplacement temps/fréquence porte une fréquence porteuse, appelée sous-porteuse ou directement porteuse dans la suite de la description.

Sur cette figure 1, les triangles à un instant t donné représentent les éléments de données à valeurs complexes d'un symbole OFDM/QAM. Les ronds et les étoiles à un instant t donné représentent quant à eux les éléments de données à valeurs réelles d'un symbole OFDM/OQAM. Par exemple, pour deux symboles OFDM/OQAM successifs à valeurs réelles, les ronds correspondent à la partie réelle et les étoiles à la partie imaginaire d'un symbole complexe issu d'une constellation QAM que l'on souhaite transmettre en utilisant une modulation OFDM/OQAM.

En effet, pour une modulation OFDM classique de type complexe, les parties réelle et imaginaire d'un complexe issu de la constellation QAM sont transmises simultanément, tous les temps symbole $T_u$ ; dans le cadre d'une modulation OFDM/OQAM de type réel, en revanche, les parties réelle et imaginaire sont transmises avec un décalage temporel d'un demi temps symbole complexe ($T_u/2$).

On constate sur cette figure 1 que l'efficacité spectrale de l'OFDM/OQAM est identique à celle de l'OFDM classique sans intervalle de garde. En effet, en notant $\nu_0$ l'espacement entre deux porteuses adjacentes du multiplex, et $\tau_0$ l'espacement temporel entre deux symboles à valeurs réelles, on transmet pour un même espacement inter-porteuses $\nu_0$ :

- en OFDM/OQAM, une valeur réelle par porteuse tous les intervalles de temps $\tau_0$ ;
- en OFDM classique sans intervalle de garde, une valeur complexe (i.e. deux valeurs réelles) tous les $2 \times \tau_0 = T_u$.

Autrement dit, l'efficacité spectrale de l'OFDM/OQAM est ($T_g + 2\tau_0$) / $2\tau_0$ fois supérieure à celle de l'OFDM classique avec un intervalle de garde de durée $T_g$.

*2.1.3 Les modulations BFDM/OQAM*

De plus, si l'on choisit d'avoir côté réception des fonctions de démodulation qui ne sont pas nécessairement les fonctions conjuguées des fonctions prototypes utilisées en émission, on peut, en utilisant la propriété de biorthogonalité, généraliser l'OFDM/OQAM à la technique de modulation BFDM/OQAM.

Le principe d'offset, lié à la famille OQAM, est strictement identique dans le cadre d'une modulation de type BFDM/OQAM. Par conséquent, la figure 1 s'applique également aux modulations de type BFDM/OQAM.

Plus précisément, l'intérêt de la modulation de type BFDM/OQAM est de permettre, pour une longueur donnée de filtre prototype, une réduction du retard apporté par le système de transmission.

Comme indiqué précédemment, la technique de modulation BFDM/OQAM, tout comme l'OFDM/OQAM, transmet des symboles à valeur réelle à une cadence double de celle à laquelle l'OFDM transmet des symboles à valeur complexe. Par conséquent, ces deux modulations ont a priori la même efficacité spectrale.

Plus précisément, le signal BFDM/OQAM peut se représenter en bande de base sous la forme suivante :

$$s(t) = \sum_{n} \sum_{m=0}^{M-1} a_{m,n} \underbrace{g(t - n\tau_0) e^{j2\pi m \nu_0 t} e^{j\phi_{m,n}}}_{g_{m,n}(t)} \qquad (1),$$

avec :

- $a_{m,n}$ les éléments de données réels à transmettre sur une porteuse $m$ à l'instant $n$ ;
- $M$ le nombre de fréquences porteuses (nécessairement pair) ;
- $g$ la fonction prototype utilisée par le modulateur ;
- $\tau_0$ la durée d'un symbole BFDM/OQAM ;
- $\nu_0$ l'espacement inter porteuses ;
- $\phi_{m,n}$ un terme de phase choisi de manière à réaliser une alternance partie réelle-partie imaginaire permettant l'orthogonalité, ou plus généralement la biorthogonalité.

En effet, dans le cas biorthogonal, la base de démodulation à la réception peut être différente de celle de l'émission, et peut s'exprimer sous la forme suivante :

$$f_{m,n}(t) = f(t - n\tau_0)e^{j2\pi m\nu_0 t}e^{j\phi_{m,n}} \qquad\qquad (2)$$

La condition de biorthogonalité s'exprime alors sous la forme suivante :

$$\langle g_{m,n}, f_{m',n'}\rangle_R = \Re\left\{\int_{-\infty}^{\infty} g_{m,n}(t)f_{m',n'}^*(t)dt\right\} = \delta_{m,m'}\delta_{n,n'} \qquad (3)$$

où : $\langle.,.\rangle_R$ désigne le produit scalaire réel et $\Re\{\ \}$ désigne la partie réelle.

Cependant un inconvénient des techniques de modulation de type BFDM/OQAM (ou OFDM/OQAM), est que la condition de biorthogonalité (ou d'orthogonalité) n'est réalisée que pour les valeurs réelles de symboles à transmettre, ce qui pose un problème d'estimation en réception, et notamment d'estimation du canal de transmission, dans la mesure où les symboles reçus sont complexes.

### 2.2 Le canal de transmission

On décrit donc succinctement ci-après les caractéristiques d'un canal de transmission, notamment en environnement radiomobile, et les techniques d'estimation d'un tel canal. On rappelle en effet que le procédé de mise en forme d'un signal électrique à partir de l'information à transmettre dépend des conditions dans lesquelles un tel signal est transmis.

#### 2.2.1 Caractéristiques du canal de transmission

En environnement radiomobile, l'onde émise subit, lors de son parcours, de multiples réflexions, et le récepteur reçoit donc une somme de versions retardées du signal émis. Chacune de ces versions est atténuée et déphasée de façon aléatoire. Ce phénomène, connu sous le nom d'étalement des retards (en anglais « delay spread »), génère de l'interférence entre symboles (IES). On entend notamment par IES une interférence entre symboles temporels et/ou entre porteuses. Par exemple, dans un environnement de type urbain, l'étalement des retards est de l'ordre de ou inférieur à quelques microsecondes.

Le récepteur (par exemple, un radiotéléphone mobile d'un automobiliste) étant supposé en mouvement, l'effet dit Doppler agit également sur chaque trajet, ce qui se traduit par un décalage en fréquence du spectre reçu, proportionnel à la vitesse de déplacement du mobile.

La conjugaison de ces effets se traduit par un canal non stationnaire présentant des évanouissements profonds à certaines fréquences. Un tel canal est notamment qualifié de canal sélectif en fréquence. Pour certaines applications, particulièrement intéressantes dans le cadre de la présente invention, la bande de transmission est de largeur supérieure à la bande de cohérence du canal (c'est-à-dire à la bande pour laquelle la réponse fréquentielle du canal peut être considérée comme constante, sur une durée donnée). Des évanouissements apparaissent donc dans la bande, c'est-à-dire qu'à un instant donné, certaines fréquences sont fortement atténuées.

Pour combattre ces différents phénomènes (dus à l'IES et à l'effet Doppler), on a envisagé dans les systèmes de type OFDM d'ajouter un intervalle de garde, pendant lequel on ne transmet pas d'informations utiles, de manière à garantir que toutes les informations reçues proviennent d'un même symbole. Dans le cas d'une démodulation cohérente des sous-porteuses, on corrige alors la distorsion apportée par le canal en estimant sa valeur en tout point du réseau temps/fréquence.

L'introduction d'un tel intervalle de garde permet ainsi de réduire les phénomènes liés à l'interférence entre symboles.

Toutefois, un inconvénient majeur de cette technique est qu'elle est d'efficacité spectrale réduite, aucune information utile n'étant transmise pendant la durée de l'intervalle de garde.

En revanche, les techniques, de modulation de type OFDM/OQAM et BFDM/OQAM, ne nécessitent pas l'introduction d'un intervalle de garde ou d'un préfixe cyclique, tout en présentant la même efficacité spectrale qu'une modulation OFDM classique.

#### 2.2.2 Estimation du canal de transmission

Les caractéristiques distinctes des modulations multiporteuses de type réel d'une part, et de type complexe d'autre part, induisent des traitements différents lors de la mise en oeuvre d'une estimation du canal de transmission.

On détaille ci-après une technique d'estimation du canal de transmission pour des modulations de type réel, par exemple OFDM/OQAM ou BFDM/OQAM. En effet, dans le cas d'une modulation multiporteuse de type réel, le fait de disposer d'une orthogonalité des translatées au sens réel rend le processus d'estimation de canal plus délicat.

En effet, pour estimer le gain complexe du canal sur une sous-porteuse donnée, il convient de réaliser la projection complexe du signal reçu sur la sous-porteuse considérée. Or, l'orthogonalité des translatées au sens réel et le fait que les fonctions prototypes, même choisies localisées au mieux en temps et en fréquence, sont de support infini sur au moins un des deux axes temporel ou fréquentiel, impliquent que, même sur un canal idéal, de l'interférence (intrinsèque) entre porteuses est générée.

En effet, la partie imaginaire de la projection du signal reçu sur la base des translatées de la fonction prototype n'est pas nulle. Il apparaît alors un terme perturbateur qui vient s'ajouter au signal démodulé, et qu'il faut corriger avant de faire l'estimation du canal. Il est donc nécessaire de concevoir des méthodes permettant de compenser cette perte d'orthogonalité complexe, et palliant ainsi au moins certains inconvénients de cette technique de l'art antérieur pour les modulations de type OFDM/OQAM ou BFDM/OQAM.

Considérons par exemple y(t) le signal reçu.

On suppose notamment que le choix des paramètres de la modulation multiporteuse assure que le canal peut être considéré comme plat sur chacune des sous-porteuses pour chaque symbole OFDM/OQAM. Le canal est alors modélisable par un coefficient complexe par sous-porteuse, noté $H_{m,n}$, où m est l'indice de la sous-porteuse et n celui du symbole OFDM/OQAM.

On utilise alors la projection complexe du signal multiporteuse au point $(m_0,n_0)$ de l'espace temps/fréquence pour estimer le canal de transmission $\hat{H}_{m0,n0}$ à cet emplacement.

Ainsi, si on émet $a_{m_0,n_0} = \sqrt{E}$ à cet emplacement, on a :

$$\hat{H}_{m_0,n_0} = \frac{\int y(t)g^*_{m_0,n_0}(t)dt}{\sqrt{E}} \qquad (4)$$

En supposant que le canal est idéal ($y(t) = s(t)$), étant donné que les modulations OFDM/OQAM et BFDM/OQAM ont seulement une orthogonalité réelle (équation (3)), on ne peut pas avoir $\hat{H}_{m_0,n_0} = 1$.

Donc, considérant $a^{(c)}_{m_0,n_0} = \left\langle s, g_{m_0,n_0} \right\rangle_C = \int s(t)g^*_{m_0,n_0}(t)dt$, et supposant que le canal est idéal, on a :

$$a^{(c)}_{m_0,n_0} = \sqrt{E} + \underbrace{\sum_{(m,n)\neq(m_0,n_0)} a_{m,n} \int g_{m,n}(t)g^*_{m_0,n_0}(t)dt}_{I_{m_0,n_0} \in j\Re} \qquad (5)$$

où $\langle .,. \rangle_C$ désigne le produit scalaire en complexe.

L'équation (5) traduit le fait que la projection complexe du signal parfaitement transmis est néanmoins entachée d'une interférence entre symboles (IES) intrinsèque aux modulations OFDM/OQAM ou BFDM/OQAM, notée $I_{m_0,n_0}$.

En particulier, l'existence de cette interférence entre symboles perturbe fortement l'estimation du canal de transmission, et, par conséquent, l'estimation des symboles.

Une solution à ce problème a notamment été proposée dans les documents de brevet WO 02/25884 et WO 02/25883 publiés le 28 mars 2002.

Plus précisément, la technique proposée dans ce document permet de limiter cette interférence, en utilisant une mise en trame spécifique des données à l'émission. Ainsi, cette technique associe à des zones 3 x 3 du réseau temps/fréquence, dite première couronne, ou zones de taille supérieure, un élément de donnée de référence, appelé pilote, ainsi qu'une donnée de contrôle.

Un inconvénient de cette technique de l'art antérieur est de nécessiter un calcul matriciel à l'émission et à la réception, avec une taille de matrice augmentant avec la taille de la couronne.

Un autre inconvénient de cette technique de l'art antérieur apparaît dans le cas d'une transmission pour laquelle la ressource temps/fréquence est répartie entre plusieurs utilisateurs. Dans ce cas, la relation de couronne impose que tous les éléments de données d'une même couronne soient affectés au même utilisateur. Cette contrainte pose notamment des problèmes de granularité et d'affectation des ressources, le nombre de pilotes émis étant généralement situé entre 2 et 5%.

Une autre technique existante utilisée pour réduire le terme d'interférence inter-symbole consiste à émettre un préambule inséré dans le signal multiporteuse en début de trame, une trame étant formée d'un ensemble d'au moins un symbole de référence appelé préambule et d'un ensemble de symboles utiles. Dans ce cas, le préambule est d'une durée minimum de $3\tau_0$.

Un inconvénient de cette technique de l'art antérieur est la perte d'efficacité spectrale liée à l'émission du préambule.

Il existe donc un besoin pour une technique permettant d'obtenir une meilleure estimation du canal de transmission, et conduisant à une estimation plus précise des éléments de données informatifs portés par le signal multiporteuse.

## 3. Exposé de l'invention

L'invention propose une solution nouvelle qui ne présente pas l'ensemble de ces inconvénients de l'art antérieur, sous la forme d'un procédé de réception d'un signal reçu correspondant à un signal multiporteuse mettant en oeuvre une modulation de type OQAM, émis par au moins un émetteur via un canal de transmission, ledit signal multiporteuse étant formé d'une succession temporelle de symboles constitués d'un ensemble d'éléments de données comprenant :

- des éléments de données informatifs à valeurs réelles, et
- pour au moins certains desdits symboles, des éléments de données de référence, appelés pilotes, connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse.

Selon l'invention, des groupes d'au moins deux pilotes étant localisés chacun dans une région dite de voisinage dans l'espace temps/fréquence, une région de voisinage étant une région dans laquelle ledit canal de transmission est considéré comme sensiblement constant, au moins un desdits groupes comprenant au moins un pilote à valeur réelle et au moins un pilote à valeur imaginaire pure, ledit procédé de réception comprend, pour au moins une desdites régions de voisinage :

- une étape d'extraction d'au moins deux valeurs complexes correspondant aux pilotes du groupe de ladite région de voisinage, après passage dans ledit canal de transmission,
- une étape d'estimation des parties réelle et imaginaire dudit canal de transmission dans ladite région de voisinage à partir desdites valeurs complexes et de la connaissance des valeurs, réelles ou imaginaires, desdits pilotes du groupe de ladite région de voisinage, avant passage dans ledit canal de transmission.

Ainsi, l'invention repose sur une approche nouvelle et inventive de l'estimation du canal de transmission, dans un système de transmission mettant en oeuvre un signal multiporteuse portant des éléments de données à valeurs réelles. En particulier, un tel signal multiporteuse est du type OFDM/OQAM ou BFDM/OQAM.

On entend notamment par « modulation de type OQAM » une modulation à porteuses multiples de type OFDM/OQAM ou BFDM/OQAM.

On rappelle que le canal de transmission est découpé en cellules selon les axes temporel et fréquentiel. À chaque cellule ou emplacement de l'espace temps/fréquence est attribuée une porteuse dédiée. On répartit donc l'information à transporter sur l'ensemble de ces porteuses.

Plus précisément, la technique selon l'invention repose sur la mise en oeuvre, côté réception, d'une estimation du canal de transmission dans une région de voisinage dans laquelle est localisé un groupe d'au moins deux pilotes.

En particulier, une région de voisinage est une région dans laquelle le canal de transmission ne varie pas, ou peu, en temps et/ou en fréquence.

Ainsi, cette technique permet une estimation du canal de transmission pour la région de voisinage, sans gaspiller la ressource temps/fréquence, puisqu'il n'est pas nécessaire d'imposer une contrainte sur la valeur d'un élément de données porté par une porteuse directement voisine (située dans une région appelée première couronne) de chacun des pilotes du groupe. Il n'est donc pas nécessaire d'imposer de relation de première couronne pour réduire l'IES.

En effet, la technique selon l'invention permet notamment, par rapport aux techniques de l'art antérieur, d'optimiser la ressource temps/fréquence, puisqu'elle ne nécessite pas l'utilisation d'un intervalle de garde, pendant lequel aucune information utile n'est transmise, ni une mise en trame spécifique des données en émission, tout en conservant la même densité de pilotes.

Ces pilotes peuvent notamment être boostés.

Selon une caractéristique particulière de l'invention, chacun desdits groupes est constitué d'une paire de pilotes.

Selon un mode de réalisation particulier, cette distribution des pilotes par paire permet notamment lors de ladite étape d'estimation de mettre en oeuvre une résolution d'un système de quatre équations à quatre inconnues pour chacune desdites paires de pilotes.

En effet, pour chaque pilote de chaque paire, on utilise, lors de cette étape d'estimation, les valeurs complexes reçues aux emplacements temps/fréquence (positions) desdits pilotes, ainsi que la connaissance des valeurs, réelles ou imaginaires, desdits pilotes avant transmission par le canal de transmission.

Selon un autre aspect de l'invention, pour un groupe comprenant au moins un pilote à valeur réelle et au moins un pilote à valeur imaginaire pure, ledit système met en oeuvre les équations suivantes :

$$\begin{cases} y^{(r)}_{m_0,n_0} = H^{(r)}_{m_0,n_0} a^{(r)}_{m_0,n_0} - CH^{(r)}_{m_0,n_0} a^{(i)}_{m_0,n_0} \\[2ex] y^{(i)}_{m_0,n_0} = CH^{(r)}_{m_0,n_0} a^{(r)}_{m_0,n_0} + H^{(r)}_{m_0,n_0} a^{(i)}_{m_0,n_0} \\[2ex] y^{(r)}_{m_1,n_1} = -sign(a^{(i)}_{m_1,n_1})(\left| a^{(r)}_{m_1,n_1} \right| + \left| a^{(i)}_{m_1,n_1} \right|) CH^{(r)}_{m_1,n_1} \\[2ex] y^{(i)}_{m_1,n_1} = sign(a^{(i)}_{m_1,n_1})(\left| a^{(r)}_{m_1,n_1} \right| + \left| a^{(i)}_{m_1,n_1} \right|) H^{(r)}_{m_1,n_1} \end{cases}$$

avec :

- $(m_0,n_0)$ un premier emplacement de l'espace temps/fréquence et $(m_1,n_1)$ un deuxième emplacement de l'espace temps/fréquence dans ladite région de voisinage,

- $y^{(r)}_{m_0,n_0}$ et $y^{(i)}_{m_0,n_0}$ des valeurs réelles égales respectivement à la partie réelle et à la partie imaginaire de la valeur complexe du signal reçu en $(m_0,n_0)$,

- $y^{(r)}_{m_1,n_1}$ et $y^{(i)}_{m_1,n_1}$ des valeurs réelles égales respectivement à la partie réelle et à la partie imaginaire de la valeur complexe de la porteuse située à l'emplacement $(m_1,n_1)$,

- $H^{(r)}_{m_0,n_0}$ la partie réelle de la valeur complexe dudit canal de transmission à l'emplacement $(m_0,n_0)$ et $H^{(r)}_{m_1,n_1}$ la partie réelle de la valeur complexe dudit canal de transmission à l'emplacement $(m_1,n_1)$, avec $H^{(r)}_{m_1,n_1}$ égal à $H^{(r)}_{m_0,n_0}$, le canal de transmission étant considéré comme sensiblement constant dans ladite région de voisinage,

- $a^{(r)}_{m_0,n_0}$ et $a^{(i)}_{m_0,n_0}$ des valeurs réelles égales respectivement à la partie réelle et à la partie imaginaire de la valeur complexe dudit pilote à valeur réelle du groupe de ladite région de voisinage à l'emplacement $(m_0,n_0)$,

- $a^{(i)}_{m_1,n_1}$ la partie imaginaire de l'interférence induite par lesdits éléments informatifs voisins dudit pilote à valeur imaginaire pure du groupe de ladite région de voisinage à l'emplacement $(m_1,n_1)$,

- $ja^{(r)}_{m_1,n_1}$ la valeur imaginaire reçue dudit pilote à valeur imaginaire pure du groupe de ladite région de voisinage à l'emplacement $(m_1,n_1)$,

- $C$ un réel.

On entend notamment par éléments informatifs "voisins" dudit pilote les éléments de données les plus proches du pilote.

Notamment, ladite étape d'estimation met en oeuvre un calcul intermédiaire d'un rapport entre lesdites parties réelle et imaginaire desdites valeurs complexes.

Dans le cas où la paire de pilotes comprend un pilote à valeur réelle et un pilote à valeur imaginaire pure, le procédé de réception selon l'invention comprend une étape de suppression d'une interférence intrinsèque induite par ledit pilote à valeur imaginaire pure.

Un autre mode de réalisation de l'invention concerne un dispositif de réception d'un signal reçu correspondant à un signal multiporteuse mettant en oeuvre une modulation de type OQAM, tel que décrit précédemment, émis par au moins un émetteur via un canal de transmission.

Selon l'invention, des groupes d'au moins deux pilotes étant localisés chacun dans une région dite de voisinage dans l'espace temps/fréquence, une région de voisinage étant une région dans laquelle ledit canal de transmission est considéré comme sensiblement constant, au moins un desdits groupes comprenant au moins un pilote à valeur réelle et au moins un pilote à valeur imaginaire pure, un tel dispositif de réception comprend, pour au moins une desdites régions de voisinage :

- des moyens d'extraction d'au moins deux valeurs complexes correspondant aux pilotes du groupe de ladite région de voisinage, après passage dans ledit canal de transmission,
- des moyens d'estimation des parties réelle et imaginaire dudit canal de transmission dans ladite région de voisinage à partir desdites valeurs complexes et de la connaissance des valeurs, réelles ou imaginaires,desdits pilotes du groupe de ladite région de voisinage, avant passage dans ledit canal de transmission.

Un tel dispositif de réception est notamment adapté à mettre en oeuvre le procédé de réception tel que décrit précédemment.

Par exemple, un tel dispositif de réception correspond ou est compris dans un terminal (radiotéléphone, ordinateur portable, PDA ...) ou dans une station de base.

Un autre aspect de l'invention concerne un procédé d'émission d'un signal multiporteuse mettant en oeuvre une modulation de type OQAM, destiné à être transmis via un canal de transmission, formé d'une succession temporelle de symboles constitués d'un ensemble d'éléments de données comprenant :

- des éléments de données informatifs à valeurs réelles, et
- pour au moins certains desdits symboles, des éléments de données de référence, appelés pilotes, connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse.

Selon l'invention, un tel procédé met en oeuvre des groupes d'au moins deux pilotes, localisés chacun dans une région dite de voisinage dans l'espace temps/fréquence, une région de voisinage étant une région dans laquelle ledit canal de transmission est considéré comme sensiblement constant, au moins un desdits groupes comprenant au moins un pilote à valeur réelle et un pilote à valeur imaginaire pure.

Plus précisément, cette technique repose sur la mise en oeuvre, côté émission, de groupes d'au moins deux pilotes, c'est-à-dire de groupes d'au moins deux éléments de données de référence, localisés dans une région de voisinage, dans laquelle peuvent également être émis des éléments de données informatifs, et dans laquelle le canal de transmission est considéré comme sensiblement constant.

Côté réception, on peut ainsi réaliser une estimation du canal de transmission au niveau de la région de voisinage.

Selon un aspect particulier de l'invention, chacun desdits groupes est constitué d'une paire de pilotes.

Notamment, les pilotes constituant une paire peuvent être répartis en temps et/ ou en fréquence.

Ainsi, si le canal de transmission est sensiblement constant en temps, les pilotes de la paire peuvent être étalés en temps, et si le canal de transmission est sensiblement constant en fréquence, les pilotes de la paire peuvent être étalés en fréquence. Si le canal est sensiblement constant en temps et en fréquence, les pilotes peuvent être également étalés en temps et en fréquence.

Selon un aspect particulier de l'invention, dans un système dans lequel au moins certaines desdites porteuses portent au moins deux éléments de données destinés respectivement à des utilisateurs et/ou des services distincts, un tel procédé d'émission met en oeuvre une même porteuse modulée par au moins deux pilotes associés chacun à un desdits utilisateurs et/ou des services.

Par exemple, un tel système permet d'utiliser certaines porteuses pour porter des éléments de données destinés à des utilisateurs distincts, à l'aide d'un code d'étalement associé à chaque utilisateur.

Ainsi, selon cet aspect particulier de l'invention, une même porteuse peut être modulée par au moins deux pilotes associés chacun à un utilisateur distinct.

De même, un tel système permet d'utiliser certaines porteuses pour porter des éléments de données destinés à des services ou usages distincts, à l'aide d'un code d'étalement associé à chaque service.

Ainsi, selon un autre aspect particulier de l'invention, une même porteuse peut être modulée par au moins deux pilotes associés chacun à un service distinct.

Selon un autre aspect de l'invention, au moins une desdites paires est constituée d'un pilote à valeur réelle et d'un pilote à valeur imaginaire pure.

Ainsi, le procédé d'émission selon l'invention comprend une étape de détermination de la nature desdits pilotes, ladite nature appartenant au groupe comprenant la nature réelle et la nature imaginaire pure.

Dans le cas où au moins un des paires de pilotes est constituée d'un pilote à valeur réelle et d'un pilote à valeur imaginaire pure, le procédé d'émission selon l'invention comprend une étape de détermination du signe dudit pilote imaginaire.

Selon un aspect particulier de l'invention, au moins une desdites étapes de détermination de la nature desdits pilotes et du signe dudit pilote imaginaire dépend de la valeur d'au moins un des éléments de données informatifs voisins de chacun desdits pilotes.

Plus particulièrement, le signe dudit pilote à valeur imaginaire pure est le même que le signe de la valeur d'un terme d'interférence induite par lesdits éléments informatifs voisins dudit pilote sur ledit pilote.

Un autre mode de réalisation de l'invention concerne également un dispositif d'émission d'un signal multiporteuse mettant en oeuvre une modulation de type OQAM tel que décrit précédemment.

Selon l'invention, un tel dispositif d'émission comprend des moyens de mise en oeuvre de groupes d'au moins deux pilotes, localisés chacun dans une région dite de voisinage dans l'espace temps/fréquence, une région de voisinage étant une région dans laquelle ledit canal de transmission est considéré comme sensiblement constant, au moins un desdits groupes comprenant au moins un pilote à valeur réelle et un pilote à valeur imaginaire pure.

Un tel dispositif d'émission est notamment adapté à mettre en oeuvre le procédé d'émission tel que décrit précédemment.

En particulier, il est adapté à émettre un tel signal multiporteuse à destination du dispositif de réception décrit ci-dessus.

Par exemple, un tel dispositif d'émission correspond ou est compris dans un terminal (radiotéléphone, ordinateur portable, PDA ...) ou dans une station de base.

Encore un autre aspect de l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de réception décrit précédemment, et/ou un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé d'émission décrit ci-dessus.

Finalement, un autre aspect de l'invention concerne un signal multiporteuse mettant en oeuvre une modulation de type OQAM, formé d'une succession temporelle de symboles constitués d'un ensemble d'éléments de données comprenant :

- des éléments de données informatifs à valeurs réelles, et
- pour au moins certains desdits symboles, des éléments de données de référence, appelés pilotes, connus d'au moins un récepteur

destiné à effectuer une réception dudit signal multiporteuse, chacun desdits éléments de données modulant une fréquence porteuse dudit signal, une fréquence porteuse modulée par un desdits éléments de données étant appelée porteuse.

Selon l'invention, ledit ensemble d'éléments de données comprend des groupes d'au moins deux pilotes, localisés chacun dans une région dite de voisinage dans l'espace temps/fréquence, une région de voisinage étant une région dans laquelle ledit canal de transmission est considéré comme sensiblement constant, au moins un desdits groupes comprenant au moins un pilote à valeur réelle et un pilote à valeur imaginaire pure.

Selon un aspect particulier de l'invention, au moins un desdits groupes est constitué d'une paire comprenant un pilote à valeur réelle et un pilote à valeur imaginaire pure.

Un tel signal peut notamment représenter un signal multiporteuse émis selon le procédé d'émission décrit ci-dessus.

Il peut également être reçu selon le procédé de réception décrit précédemment.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1, déjà commentée en relation avec l'art antérieur, est une représentation temps/fréquence des symboles à valeurs complexes transmis selon une modulation OFDM classique et des symboles à valeurs réelles transmis selon une modulation OFDM/OQAM de l'art antérieur ;
- la figure 2A illustre la structure d'un signal à porteuses multiples selon un mode de réalisation de l'invention ;
- les figures 2B et 2C illustrent des exemples de répartition particulière des paires de pilotes selon des modes de réalisation de l'invention ;
- la figure 3 illustre un exemple de positionnement des pilotes d'un signal à porteuses multiples selon un mode de réalisation de l'invention ;
- la figure 4 présente les principales étapes du procédé de réception selon un mode de réalisation de l'invention ;
- la figure 5 illustre le résultat comparatif d'une estimation de canal parfaite et d'une estimation de canal selon un mode de réalisation particulier de l'invention ;
- les figures 6A et 6B présentent respectivement la structure d'un dispositif d'émission et d'un dispositif de réception, selon un mode de réalisation particulier de l'invention.

## 5. Description d'un mode de réalisation de l'invention

Le principe général de l'invention repose sur la prise en compte d'au moins un groupe de pilotes, dans un signal à porteuses multiples mettant en oeuvre des éléments de données informatifs à valeurs réelles, de façon à obtenir, en réception, une estimation du canal de transmission entre un émetteur et un récepteur.

Plus précisément, l'invention repose, selon un mode de réalisation particulier, sur le fait que chaque groupe de pilotes est localisé dans une région dite de voisinage, dans laquelle le canal de transmission est considéré comme sensiblement constant.

Ainsi, l'estimation du canal de transmission selon ce mode de réalisation est obtenue pour ladite région de voisinage.

On décrit ci-après un mode de réalisation particulier de l'invention, mis en oeuvre dans le cadre d'une modulation multiporteuse de type OFDM/OQAM.

Côté émission, on insère dans le signal multiporteuse un ou plusieurs groupes de pilotes, au moins un des groupes comprenant au moins un pilote à valeur réelle et au moins un pilote à valeur imaginaire pure, c'est-à-dire des éléments de données de référence, connus du récepteur, localisés dans une région de voisinage dans laquelle le canal de transmission est considéré comme invariant.

Particulièrement, un groupe de pilotes selon ce mode de réalisation de l'invention, est constitué d'une paire de pilotes, répartis en temps et/ou en fréquence, selon que le canal est considéré comme sensiblement constant en temps et/ou en fréquence.

Ce mode de réalisation n'est bien sûr pas limitatif, les groupes de pilotes pouvant comprendre plus de deux pilotes (par exemple trois ou quatre pilotes). De plus, si l'on considère plusieurs groupes de pilotes, ces groupes peuvent avoir une cardinalité distincte (c'est-à-dire un nombre de pilotes différent dans chaque groupe).

Plus précisément, comme illustré en relation avec la figure 2A, on considère un signal multiporteuse formé d'une succession temporelle de symboles $21_1$, $21_2$, ..., $21_N$, constitués d'un ensemble d'éléments de données comprenant :

- des éléments de données informatifs à valeurs réelles, correspondant aux ronds blancs vides ; et
- pour au moins certains desdits symboles, des éléments de données de référence appelés pilotes, correspondant aux ronds blancs annotés avec la lettre P, connus d'au moins un récepteur destiné à effectuer une réception du signal multiporteuse.

Plus précisément, les pilotes sont insérés, par paire, dans le signal multiporteuse de façon à permettre une estimation du canal de transmission, en réception, pour la région dans laquelle lesdits pilotes sont insérés en émission.

Par exemple, si l'on considère que le canal est sensiblement constant en temps sur une région de voisinage 22, délimitée en traits pointillés, les pilotes P1 et P2 de la paire 221, délimitée en trait plein sur la figure 2A, sont ajoutés dans le signal multiporteuse sur deux symboles réels consécutifs en temps de la région 22.

Suivant les variations temporelles du canal de transmission, les pilotes peuvent être insérés sur deux symboles non consécutifs, comme par exemple les pilotes P3 et P4 de la paire 231, une région de voisinage 23 considérée pour l'estimation du canal étant délimitée en traits pointillés.

Selon une variante de réalisation dans laquelle le canal de transmission ne varie pas ou peu en fréquence, les pilotes P5 et P6 de la paire 241 (délimitée en trait plein sur la figure 2A) sont ajoutés dans le signal multiporteuse sur deux fréquences consécutives d'une région de voisinage 24 (délimitée en traits pointillés).

De même, suivant les variations fréquentielles du canal de transmission, les pilotes peuvent être insérés sur deux fréquences non consécutives.

Selon une autre variante de réalisation de l'invention, les pilotes P7 et P8 de la paire 251 sont ajoutés dans le signal multiporteuse sur deux symboles consécutifs et sur deux fréquences consécutives. Dans ce cas, le canal est considéré comme sensiblement constant en temps et en fréquence, dans une région de voisinage 25 (délimitée en traits pointillés), considérée pour l'estimation du canal.

Par exemple, le pilote P7 de la paire 251 est à valeur réelle, et le pilote P8 de la paire 251 est à valeur imaginaire pure.

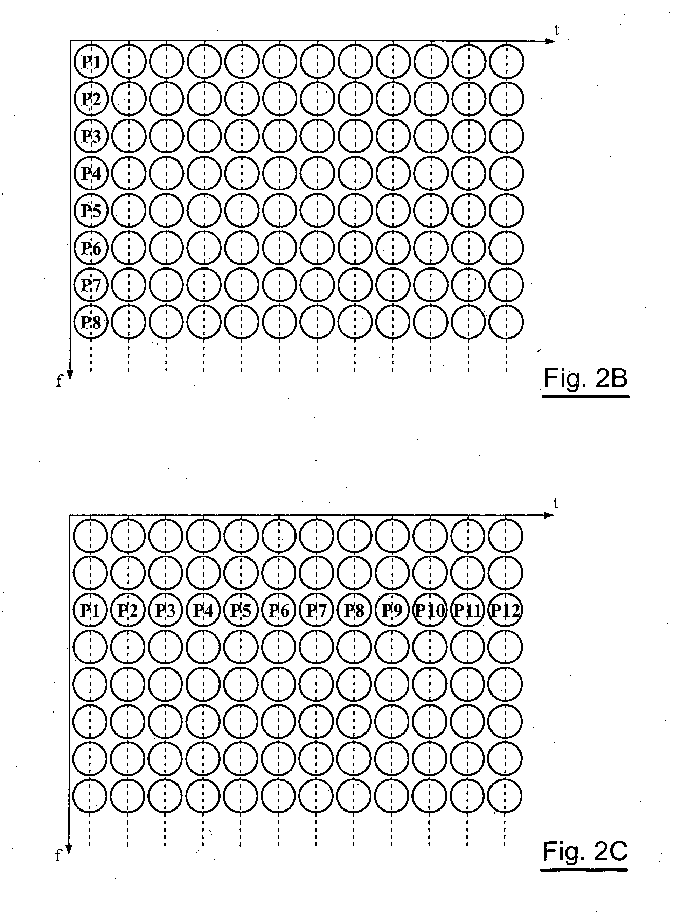

Deux exemples de variantes de réalisation sont illustrés en figure 2B et 2C.

En figure 2B, les paires de pilotes, chacun ayant une valeur réelle ou imaginaire pure, sont insérées sur le même symbole de façon à former un préambule. Les paires de pilotes (P2m-1, P2m) permettent d'estimer le canal au temps t. On rappelle qu'au moins une des paires comprend un pilote à valeur réelle et un pilote à valeur imaginaire pure.

En figure 2C, les paires de pilotes, chacun ayant une valeur réelle ou imaginaire pure, sont insérées sur une porteuse dédiée, sur des symboles consécutifs en temps. Les paires de pilotes (P2m-1, P2m) permettent d'estimer le canal à la fréquence m. De nouveau, au moins une des paires comprend un pilote à valeur réelle et un pilote à valeur imaginaire pure.

Dans ces deux variantes, l'estimation du canal peut également être réalisée à partir de groupes de trois pilotes ou plus, permettant ainsi, selon le canal, une meilleure estimation.

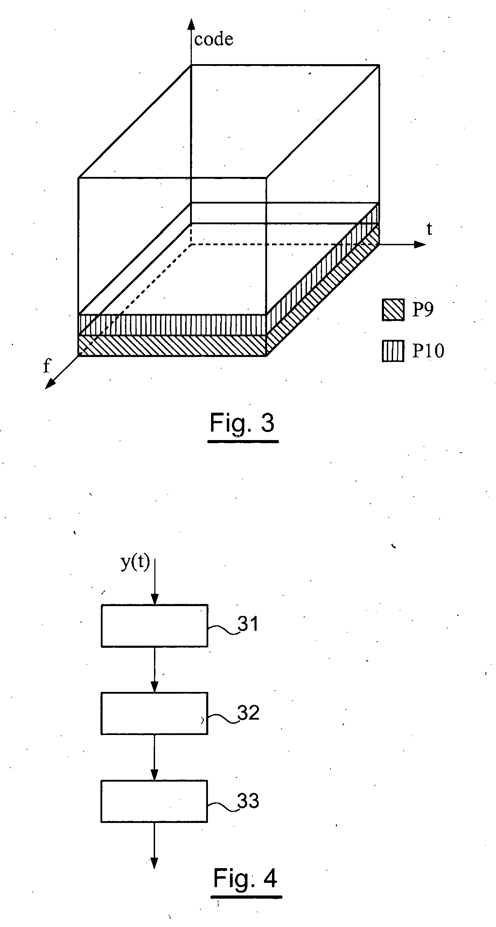

Selon une autre variante de réalisation, illustrée en figure 3, certaines porteuses du signal multiporteuse portent au moins deux éléments de données destinés respectivement à des utilisateurs et/ou des services distincts. Le procédé d'émission de l'invention, selon cette variante de réalisation, insère sur la même porteuse, représentée sur cette figure comme un pavé temps/fréquence dans lequel le canal est supposé sensiblement constant, deux pilotes P9 et P10, transmis en même temps que des données, et étant destinés à deux utilisateurs et/ou deux services distincts. L'axe appelé "code" permet d'associer à chaque élément de données (informatifs ou de référence) un code, connu du récepteur, et servant à distinguer les utilisateurs et/ou services.

Côté réception, comme illustré en relation avec la figure 4, on effectue une extraction 31 des valeurs complexes correspondant aux pilotes d'un groupe dans une région de voisinage, à partir du signal reçu y(t). On considère à titre d'exemple un groupe comprenant une paire de pilotes.

A partir de ces valeurs complexes, on obtient un système de quatre équations à quatre inconnues, pour chaque paire de pilotes.

On effectue d'abord un calcul intermédiaire 32 du rapport entre les parties réelles et imaginaires du canal, en tenant compte des valeurs réelles et/ou imaginaires des deux pilotes de la paire et des valeurs complexes reçues sur leurs positions et extraites à l'étape 31.

On résout ensuite le système d'équations à l'étape 33 pour obtenir l'estimation du canal de transmission pour la région de voisinage de la paire de pilotes considérée.

On décrit ci-après un premier exemple de mise en oeuvre de la technique de réception selon une première variante de ce mode de réalisation particulier de l'invention, dans le cadre d'une modulation de type BFDM/OQAM.

Plus précisément, le signal reçu y(t) peut s'écrire sous la forme :

$$y(t) = \sum_{n} \sum_{m=0}^{M-1} H_{m,n}^{(c)} a_{m,n} g_{m,n}(t) + b(t) \qquad (6),$$

avec $H_{m,n}^{(c)}$ les coefficients complexes représentatifs du canal de transmission à chaque emplacement temps/fréquence, avec m l'indice fréquentiel et n l'indice temporel, et *b(t)* la composante de bruit.

Comme déjà précisé pour les modulations de type OFDM/OQAM, le signal émis et le canal de transmission étant modélisés en bande de base par des nombres complexes, le coefficient $a_{m_0,n_0}^{(c)}$ à estimer en réception pour chaque élément ($m_0, n_0$) du réseau temps/fréquence est également un nombre complexe.

En supposant également que le canal est approximativement constant sur une région donnée de l'espace temps/fréquence, du fait de la biorthogonalité de la paire de fonctions (*f,g*) décrite en relation avec l'équation (3), le signal reçu sur la porteuse $m_0$ à l'instant $n_0$ est estimé par :

$$y_{m_0,n_0}^{(c)} = \left\langle s, f_{m_0,n_0} \right\rangle_C$$

$$y_{m_0,n_0}^{(c)} = H_{m_0,n_0}^{(c)} a_{m_0,n_0} + H_{m_0,n_0}^{(c)} \underbrace{\left[ \sum_{(m,n) \neq (m_0,n_0)} a_{m,n} \int g_{m,n}(t) f_{m_0,n_0}^*(t) dt \right]}_{C_{m_0,n_0}} + D_{m_0,n_0} + b_{m_0,n_0} \qquad (7)$$

Dans cette expression, le terme $C_{m_0,n_0}$ est lié à l'interférence créée dans la région où le canal de transmission est supposé constant, et le terme $D_{m_0,n_0}$ est associé à l'interférence créée dans les régions où le canal de transmission n'est plus supposé constant.

Dans la suite de la description, on omet la composante de bruit $b$, et on néglige le terme $D_{m_0,n_0}$ de façon à simplifier les équations.

On suppose ici que le canal est sensiblement constant en temps et/ou en fréquence, c'est à dire sur $(\delta n +1)\tau_0$ et/ou sur $(\delta m +1)v_0$, avec $\delta n$ et $\delta m$ des entiers.

L'équation (7) s'écrit alors :

$$y_{m_0,n_0}^{(c)} = H_{m_0,n_0}^{(c)} a_{m_0,n_0} + H_{m_0,n_0}^{(c)} C_{m_0,n_0} = H_{m_0,n_0}^{(c)} \left( a_{m_0,n_0} + C_{m_0,n_0} \right),$$

avec $a_{m_0,n_0}$ un réel et $C_{m_0,n_0}$ un imaginaire pur.

On considère ainsi que le signal reçu, en tout emplacement *(m,n)* du réseau temps/fréquence, peut s'interpréter comme le résultat du produit d'un canal complexe par un coefficient complexe, c'est-à-dire :

$$y_{m,n}^{(c)} = H_{m,n}^{(c)} a_{m,n}^{(c)} = H_{m,n}^{(c)} \left( a_{m,n}^{(r)} + j a_{m,n}^{(i)} \right) = H_{m,n}^{(c)} \left( a_{m,n}^{(r)} + C_{m,n} \right),$$

où $a_{m,n}^{(r)}$ et $a_{m,n}^{(i)}$ sont des valeurs réelles (l'exposant (r) indiquant la partie réelle d'une valeur complexe, et l'exposant (i) la partie imaginaire).

On considère ici une variante particulière du mode de réalisation, dans laquelle le canal est sensiblement constant en temps, sur une durée $2\tau_0$. Dans cet exemple, les pilotes $a_{m_0,n_0}$ et $a_{m_0,n_0}+1$ sont insérés dans le signal aux emplacements $(m_0,n_0)$ *et* $(m_0,n_0 + 1)$, et forment une paire utilisée pour l'estimation du canal dans une région de voisinage où le canal est considéré comme sensiblement constant en temps.

Les parties réelle et imaginaire du signal reçu $y_{m,n}^{(c)}$ s'écrivent de la façon suivante , en posant $H_{m,n}^{(c)} = H_{m,n}^{(r)} + j H_{m,n}^{(i)}$ :

$$\begin{cases} y_{m,n}^{(r)} = H_{m,n}^{(r)} a_{m,n}^{(r)} - H_{m,n}^{(i)} a_{m,n}^{(i)} \\ y_{m,n}^{(i)} = H_{m,n}^{(i)} a_{m,n}^{(r)} + H_{m,n}^{(r)} a_{m,n}^{(i)} \end{cases} \qquad (8)$$

Le canal étant supposé constant sur $2\tau_0$, on a $H_{m_0,n_0}^{(c)} = H_{m_0,n_0+1}^{(c)}$. En posant $H_{m_0,n_0}^{(i)} = C H_{m_0,n_0}^{(r)}$, $C$ étant un réel, on obtient le système de quatre équations à quatre inconnues suivant :

$$\begin{cases} y_{m_0,n_0}^{(r)} = H_{m_0,n_0}^{(r)} a_{m_0,n_0}^{(r)} - CH_{m_0,n_0}^{(r)} a_{m_0,n_0}^{(i)} \\ y_{m_0,n_0}^{(i)} = CH_{m_0,n_0}^{(r)} a_{m_0,n_0}^{(r)} + H_{m_0,n_0}^{(r)} a_{m_0,n_0}^{(i)} \\ y_{m_0,n_0+1}^{(r)} = H_{m_0,n_0}^{(r)} a_{m_0,n_0+1}^{(r)} - CH_{m_0,n_0}^{(r)} a_{m_0,n_{0+1}}^{(i)} \\ y_{m_0,n_0+1}^{(i)} = CH_{m_0,n_0}^{(r)} a_{m_0,n_0+1}^{(r)} + H_{m_0,n_0}^{(r)} a_{m_0,n_0+1}^{(i)} \end{cases} \qquad (9)$$

d'où l'on peut en déduire :

$$\begin{cases} a_{m_0,n_0+1}^{(r)} y_{m_0,n_0}^{(r)} - a_{m_0,n_0}^{(r)} y_{m_0,n_0+1}^{(r)} = CH_{m_0,n_0}^{(r)} (-a_{m_0,n_0+1}^{(r)} a_{m_0,n_0}^{(i)} + a_{m_0,n_0}^{(r)} a_{m_0,n_0+1}^{(i)}) \\ a_{m_0,n_0+1}^{(r)} y_{m_0,n_0}^{(i)} - a_{m_0,n_0}^{(r)} y_{m_0,n_0+1}^{(i)} = H_{m_0,n_0}^{(r)} (a_{m_0,n_0+1}^{(r)} a_{m_0,n_0}^{(i)} - a_{m_0,n_0}^{(r)} a_{m_0,n_0+1}^{(i)}) \end{cases}$$

En faisant le rapport des deux équations :

$$C = \frac{a_{m_0,n_0+1}^{(r)} y_{m_0,n_0}^{(r)} - a_{m_0,n_0}^{(r)} y_{m_0,n_0+1}^{(r)}}{a_{m_0,n_0}^{(r)} y_{m_0,n_0+1}^{(i)} - a_{m_0,n_0+1}^{(r)} y_{m_0,n_0}^{(i)}} \qquad (10)$$

et en considérant que l'équation (8) peut s'écrire de la façon suivante :

$$\begin{cases} y_{m,n}^{(r)} = H_{m,n}^{(r)} a_{m,n}^{(r)} - CH_{m,n}^{(r)} a_{m,n}^{(i)} \\ y_{m,n}^{(i)} = CH_{m,n}^{(r)} a_{m,n}^{(r)} + H_{m,n}^{(r)} a_{m,n}^{(i)} \end{cases}$$

on obtient :

$$\begin{cases} y_{m_0,n_0}^{(r)} = H_{m_0,n_0}^{(r)} a_{m_0,n_0}^{(r)} - CH_{m_0,n_0}^{(r)} a_{m_0,n_0}^{(i)} \\ Cy_{m_0,n_0}^{(i)} = C^2 H_{m_0,n_0}^{(r)} a_{m_0,n_0}^{(r)} + CH_{m_0,n_0}^{(r)} a_{m_0,n_0}^{(i)} \end{cases}$$

En faisant la somme de ces deux équations, on a :

$$H_{m_0,n_0}^{(r)} a_{m_0,n_0}^{(r)} (1+C^2) = y_{m_0,n_0}^{(r)} + Cy_{m_0,n_0}^{(i)}$$

d'où :

$$H_{m_0,n_0}^{(r)} = \frac{y_{m_0,n_0}^{(r)} + Cy_{m_0,n_0}^{(i)}}{a_{m_0,n_0}^{(r)} (1+C^2)} \quad \text{et} \quad H_{m_0,n_0}^{(i)} = CH_{m_0,n_0}^{(r)}$$

On obtient ainsi l'estimation du canal dans une région de voisinage, où le canal est considéré comme sensiblement constant, et dans laquelle une paire de pilotes a été insérée selon le mode de réalisation décrit ci-dessus.

Plus généralement, les deux pilotes réels peuvent être insérés dans le signal à n'importe quelles positions $(m_1, n_1)$ et $(m_2, n_2)$ avec $(m_2 = m_1 + \delta m, n_2 = n_1 + \delta n)$, la seule contrainte étant que le canal reste pratiquement invariant sur un nombre de fréquences correspondant à $\delta m + 1$ et sur un nombre de symboles réels équivalent à $\delta n + 1$.

La méthode de résolution telle que décrite précédemment s'applique à ce cas général.

On décrit ci-après un deuxième exemple de mise en oeuvre de la technique de réception selon une deuxième variante de ce mode de réalisation particulier de l'invention, dans le cadre d'une modulation de type BFDM/OQAM.

Dans cet exemple, la paire de pilotes utilisée pour l'estimation du canal dans une région de voisinage où le canal est considéré comme sensiblement constant en temps, comprend un premier pilote $a_{m_0,n_0}j$ à valeur imaginaire pure à la position $(m_0,n_0)$ et un deuxième pilote $a_{m_0,n_0}+1$ à valeur réelle à la position $(m_0,n_0 + 1)$.

La valeur réelle $a_{m_0,n_0}+1$ du deuxième pilote est connue du récepteur, et la valeur $a_{m_0,n_0}j$ du premier pilote est également connue, au signe près, du récepteur. En effet, le signe de la valeur du pilote à valeur imaginaire pure, dit premier pilote, dépend des éléments de données informatifs à valeurs réelles transmis autour de ce premier pilote.

On décrit ci-dessous une méthode pour déterminer le signe de la valeur du premier pilote $a_{m_0,n_0}j$, *en* calculant l'interférence imaginaire autour de la position $(m_0,n_0)$ du premier pilote à partir de la relation suivante :

$$a_{m_0,n_0}^{(i)} \approx \sum_{p,q \in \Omega_{P,Q}} \Im\{\beta_{m_0+p,n_0+q}^{(m_0,n_0)}\} a_{m_0+p,n_0+q}^{(r)} \approx \sum_{p,q \in \Omega_{P,Q}} \Im\{\beta_{m_0+p,n_0+q}^{(m_0,n_0)}\} a_{m_0+p,n_0+q}^{(r)}$$

où $\Omega_{P,Q}$ correspond au voisinage du plan temps-fréquence autour du point $(m_0,n_0)$, s'écartant au plus de $\pm P$ positions en temps et $\pm Q$ en fréquence, à l'exclusion de l'élément central, et

où $\beta_{p,q}$ est une expression dont les valeurs réelles dépendent des fonctions $g$ et $f$ et du terme de phase $\phi_{m,n}$, et dont les éléments principaux sont présentés en annexe A, qui fait partie intégrante de la présente description.

On considère par la suite $P$ et $Q$ égaux à 1, et on détermine le signe du pilote imaginaire de la façon suivante :

- si $a_{m_0,n_0}^{(i)} < 0$ , on transmet un pilote à valeur imaginaire pure de signe négatif à la position $(m_0,n_0)$, dont le module est connu du récepteur (par exemple -1),

- si $a_{m_0,n_0}^{(i)} > 0$ , on transmet un pilote à valeur imaginaire pure de signe positif à la position $(m_0,n_0)$, dont le module est connu du récepteur (par exemple +1)

Une fois le signe et la valeur choisis pour le pilote $a_{m_0,n_0}$ à valeur imaginaire pure, on détermine la valeur du pilote à valeur réelle transmis à la position $(m_0,n_0 + 1)$.

D'une manière générale, il suffit d'avoir :

$$\left| a_{m_0,n_0+1}^{(r)} \right| > \left| \beta_{m_0,n_0}^{(m_0,n_0+1)} a_{m_0,n_0}^{(r)} \right|.$$

Préférentiellement, on choisit $a_{m_0,n_0}+1$ et $a_{m_0,n_0}$ égaux en module.

On s'intéresse maintenant au signal reçu en tout emplacement du réseau temps/fréquence, qui peut s'interpréter comme le résultat du produit d'un canal complexe par un coefficient complexe, c'est à dire :

$y_{m,n}^{(c)} = H_{m,n}^{(c)} a_{m,n}^{(c)} = H_{m,n}^{(c)}\left( a_{m,n}^{(r)} + j a_{m,n}^{(i)} \right)$, où $a_{m,n}^{(r)}$ et $a_{m,n}^{(i)}$ sont des valeurs réelles (l'exposant (r) indiquant la partie réelle d'une valeur complexe, et l'exposant (i) la partie imaginaire).

On considère l'exemple dans lequel on transmet un pilote $a_{m_0,n_0}$ à valeur imaginaire pure à la position $(m_0,n_0)$ et un pilote $a_{m_0,n_0}+1$ à valeur réelle à la position $(m_0,n_0 + 1)$, avec :

- $a_{m_0,n_0}j$ imaginaire et de même signe que $a_{m_0,n_0}^{(i)}$ ,

- $a_{m_0,n_0}+1$ réel et connu du récepteur.

On a alors, aux positions $(m_0,n_0)$ et $(m_0,n_0 + 1)$ des deux pilotes, un signal reçu pouvant s'écrire de la manière suivante : et

$$y_{m_0,n_0}^{(c)} = H_{m_0,n_0}^{(c)}\left( a_{m_0,n_0}^{(r)} j + j a_{m_0,n_0}^{(i)} \right)$$

$$y^{(c)}_{m_0,n_0+1} = H^{(c)}_{m_0,n_0+1}(a^{(r)}_{m_0,n_0+1} + ja^{(i)}_{m_0,n_0+1}) - \beta^{(m_0,n_0+1)}_{m_0,n_0} H^{(c)}_{m_0,n_0} a^{(r)}_{m_0,n_0} j$$

En effet, le fait de transmettre un pilote à valeur imaginaire pure à la position $(m_0,n_0)$ induit une interférence de valeur $\beta^{(m_0,n_0+1)}_{m_0,n_0} a^{(r)}_{m_0,n_0} j$ $\left(\text{avec } \left|\beta^{(m_0,n_0+1)}_{m_0,n_0}\right| < 1\right)$, que nous appellerons intrinsèque dans la suite de la description, en $(m_0,n_0 + 1)$.

On rappelle que dans cette deuxième variante de ce mode de réalisation particulier de l'invention, on considère également, comme dans la première variante, que le canal est sensiblement constant en temps. On peut donc écrire :

$$H^{(c)}_{m_0,n_0+1} = H^{(c)}_{m_0,n_0} = R * \exp(j\phi_0)$$

où R est le module du canal (donc réel positif) et $\phi_0$ la phase du canal.

Le signal reçu aux positions des deux pilotes s'écrit donc :

$$\begin{cases} y^{(c)}_{m_0,n_0} = H^{(c)}_{m_0,n_0} j(a^{(r)}_{m_0,n_0} + a^{(i)}_{m_0,n_0}) \\ y^{(c)}_{m_0,n_0+1} = H^{(c)}_{m_0,n_0}(a^{(r)}_{m_0,n_0+1} + \beta^{(m_0,n_0+1)}_{m_0,n_0} a^{(r)}_{m_0,n_0} j + ja^{(i)}_{m_0,n_0+1}) \end{cases}$$

$$(11)$$

En $(m_0,n_0)$ (la position du pilote à valeur imaginaire pure), le signal reçu s'écrit :

$$y^{(c)}_{m_0,n_0} = H^{(c)}_{m_0,n_0} j(a^{(r)}_{m_0,n_0} + a^{(i)}_{m_0,n_0})$$

$$(12)$$

Si on considère $\phi_1$ la phase de ce signal reçu $y^{(c)}_{m_0,n_0}$, d'après (12), on a :

- si $a^{(i)}_{m_0,n_0} > 0$ $\phi_0 = \phi_1 - \frac{\pi}{2}$

- si $a^{(i)}_{m_0,n_0} < 0$ $\phi_0 = \phi_1 - \frac{\pi}{2} + \pi$

Ce qui donne pour le signal reçu à la position $(m_0,n_0 + 1)$ (celle du pilote à valeur réelle) l'équation suivante :

$$\exp\left(-j\phi_1 + j\frac{\pi}{2}\right)y^{(c)}_{m_0,n_0+1} = R\exp\left(j(\phi_0 - \phi_1 + \frac{\pi}{2})\right)(a^{(r)}_{m_0,n_0+1} + \beta^{(m_0,n_0+1)}_{m_0,n_0} a^{(r)}_{m_0,n_0} j + ja^{(i)}_{m_0,n_0+1})$$

On considère maintenant les deux cas correspondant aux deux signes de $a^{(i)}_{m_0,n_0}$ :

a) si $a^{(i)}_{m_0,n_0} > 0$, on peut écrire :

$$\exp(-j\phi_1 + j\frac{\pi}{2})y^{(c)}_{m_0,n_0+1} = R(a^{(r)}_{m_0,n_0+1} + \beta^{(m_0,n_0+1)}_{m_0,n_0}a^{(r)}_{m_0,n_0}j + ja^{(i)}_{m_0,n_0+1})$$

ce qui donne :

$$\Re(\exp(-j\phi_1 + j\frac{\pi}{2})y^{(c)}_{m_0,n_0+1}) = R(a^{(r)}_{m_0,n_0+1} + \beta^{(m_0,n_0+1)}_{m_0,n_0}a^{(r)}_{m_0,n_0}j)$$

De cette dernière expression, on peut déduire les affirmations suivantes, car on sait que $R(a^{(r)}_{m_0,n_0+1} + \beta^{(m_0,n_0+1)}_{m_0,n_0}a^{(r)}_{m_0,n_0}j)$ est du signe de $a^{(r)}_{m_0,n_{0+1}}$ :

- $a^{(r)}_{m_0,n_0}$ est positif, son module est connu du récepteur, donc sa valeur est connue du récepteur,

-la phase du canal est : $\phi_1 - \frac{\pi}{2}$ ,

-le module du canal s'écrit :

$$\frac{\Re(\exp(-j\phi_1 + j\frac{\pi}{2})y^{(c)}_{m_0,n_0+1})}{(a^{(r)}_{m_0,n_0+1} + \beta^{(m_0,n_0+1)}_{m_0,n_0}a^{(r)}_{m_0,n_0}j)}.$$

b) si $a^{(i)}_{m_0,n_0} < 0$ , on peut écrire :

$$\exp(-j\phi_1 + j\frac{\pi}{2})y^{(c)}_{m_0,n_0+1} = -R(a^{(r)}_{m_0,n_0+1} + \beta^{(m_0,n_0+1)}_{m_0,n_0}a^{(r)}_{m_0,n_0}j + ja^{(i)}_{m_0,n_0+1})$$

ce qui donne :

$$\Re(\exp(-j\phi_1 + j\frac{\pi}{2})y^{(c)}_{m_0,n_0+1}) = -R(a^{(r)}_{m_0,n_0+1} + \beta^{(m_0,n_0+1)}_{m_0,n_0}a^{(r)}_{m_0,n_0}j)$$

Là encore, de cette dernière expression, on peut déduire les affirmations suivantes, car on sait que $-R(a^{(r)}_{m_0,n_0+1} + \beta^{(m_0,n_0+1)}_{m_0,n_0}a^{(r)}_{m_0,n_0}j)$ est du signe opposé à $a^{(r)}_{m_0,n_{0+1}}$ :

- $a^{(r)}_{m_0,n_0}$ est négatif, son module est connu du récepteur, donc sa valeur est connue du récepteur,

- la phase du canal est: $\phi_1 - \frac{\pi}{2} + \pi$ ,

- le module du canal s'écrit :

$$\frac{-\Re(\exp(-j\phi_1 + j\frac{\pi}{2})y^{(c)}_{m_0,n_0+1})}{(a^{(r)}_{m_0,n_0+1} + \beta^{(m_0,n_0+1)}_{m_0,n_0}a^{(r)}_{m_0,n_0}j)}.$$

Dans les deux cas, on obtient donc une estimation du canal, et la connaissance de la valeur de $a^{(r)}_{m_0,n_0}$ permet de supprimer les interférences autour de la position du pilote à valeur imaginaire pure.

Dans cette deuxième variante de ce mode de réalisation particulier (cas avec un pilote à valeur réelle et un pilote à valeur imaginaire pure), on peut également reprendre le même raisonnement que dans la première variante (cas avec les deux pilotes réelles) en partant du système d'équations suivants :

$$\begin{cases} y_{m_0,n_0}^{(r)} = H_{m_0,n_0}^{(r)} a_{m_0,n_0}^{(r)} - CH_{m_0,n_0}^{(r)} a_{m_0,n_0}^{(i)} \\ y_{m_0,n_0}^{(i)} = CH_{m_0,n_0}^{(r)} a_{m_0,n_0}^{(r)} + H_{m_0,n_0}^{(r)} a_{m_0,n_0}^{(i)} \\ y_{m_1,n_1}^{(r)} = -\mathrm{sign}(a_{m_1,n_1}^{(r)})(|a_{m_1,n_1}^{(i)}| + |a_{m_1,n_1}^{(i)}|) CH_{m_1,n_1}^{(r)} \\ y_{m_1,n_1}^{(i)} = \mathrm{sign}(a_{m_1,n_1}^{(r)})(|a_{m_1,n_1}^{(i)}| + |a_{m_1,n_1}^{(i)}|) H_{m_1,n_1}^{(r)} \end{cases} \qquad (13)$$

Dans le cas particulier illustré par la figure 3, déjà décrite plus haut, la méthode de résolution est la même, avec une valeur de pilote reçue à un emplacement $(m, n)$ pouvant s'écrire de la façon suivante :

$$a_{m,n} = \sum_{u=0}^{N-1} a_{m,n,u} \ \text{avec} \ a_{m,n,u} = c_{u(m,n)} d_{m,n} \qquad (14)$$

où $c_{u(m,n)}$ désigne le code d'étalement, permettant de reconnaître l'utilisateur et/ou le service associé, et $d_{m,n}$ une valeur de pilote.

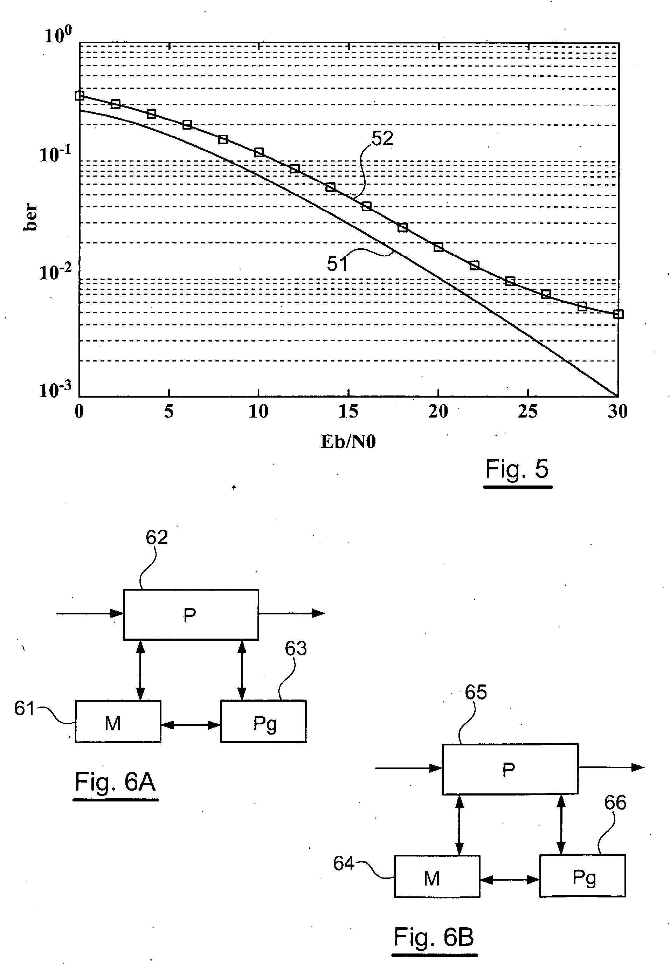

On présente maintenant, en relation avec la figure 5, une courbe de performances en taux d'erreur bit, tenant compte d'une estimation parfaite du canal de transmission 51 et d'une estimation de canal 52 selon un exemple de réalisation particulier de l'invention.

Les paramètres pris en considération pour estimer un canal de type radio-mobile, dit SCM ("Spatial Channel Mode" en anglais), selon cet exemple, sont les suivants :

- fréquence centrale : 2000 MHz,
- vitesse de déplacement du mobile : 50 km/h,
- nombre de trajets : 6
- profil de puissance (en dB) : -3.0, 0.0, -2.0, -6.0, -8.0, -10.0,
- profil des délais (ns) : 0, 195.315, 488.28125, 976.5625, 2246.09375,4882.8125.

La fonction prototype utilisée est la fonction IOTA, telle que décrite par exemple dans le document de brevet FR 2733869, de longueur $4\tau_0$, et chaque porteuse est modulée par une modulation de phase. La courbe 52 représente le taux d'erreur bit en réception, en tenant compte d'une estimation du canal selon un mode de réalisation particulier de l'invention, dans lequel on suppose que le canal est sensiblement constant sur deux fréquences consécutives et dans lequel on a réparti les paires de pilotes sur toute la trame. L'autre courbe 51 représente le taux d'erreur bit en réception en tenant compte d'une connaissance parfaite du canal de transmission à l'émission.

On présente désormais, en relation avec les figures 6A et 6B, les structures simplifiées d'un dispositif d'émission et de réception selon le mode de réalisation particulier décrit ci-dessus.

Comme illustré en figure 6A, un tel dispositif d'émission comprend une mémoire 61, une unité de traitement 62, équipée par exemple d'un microprocesseur μP, et pilotée par le programme d'ordinateur 63, mettant en oeuvre le procédé d'émission selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée des données à transmettre, sous la forme d'éléments de données informatifs. Le microprocesseur de l'unité de traitement 62 met en oeuvre les étapes du procédé d'émission décrit précédemment, de façon à construire un signal multiporteuse comprenant des groupes d'au moins deux pilotes à valeur réelle, localisés chacun dans une région dite de voisinage dans l'espace temps/fréquence, une région de voisinage étant une région dans laquelle le canal de transmission est considéré comme sensiblement constant.

Pour cela, le dispositif d'émission comprend des moyens de mise en oeuvre des groupes d'au moins deux pilotes à valeur réelle. Ces moyens sont pilotés par le microprocesseur de l'unité de traitement 62.

L'unité de traitement 62 délivre en sortie le signal multiporteuse précité.

Comme illustré en figure 6B, un dispositif de réception comprend une mémoire 64, une unité de traitement 65, équipée par exemple d'un microprocesseur μP, et pilotée par le programme d'ordinateur 66, mettant en oeuvre le procédé de réception selon l'invention.

A l'initialisation, les instructions de code du programme d'ordinateur 66 sont par exemple chargées dans une mémoire RAM avant d'être exécutées par le processeur de l'unité de traitement 65. L'unité de traitement 65 reçoit en entrée un signal multiporteuse reçu y(t). Le microprocesseur de l'unité de traitement 65 met en oeuvre les étapes du procédé de réception décrit précédemment, selon les instructions du programme d'ordinateur 66, pour estimer le canal de transmission et décoder les données reçues. Pour cela, le dispositif de réception comprend des moyens d'extraction d'au moins deux valeurs complexes correspondant aux pilotes du groupe de ladite région de voisinage, après passage dans ledit canal de transmission, et des moyens d'estimation des parties réelle et imaginaire dudit canal de transmission dans ladite région de voisinage à partir desdites valeurs complexes. Ces moyens sont pilotés par le microprocesseur de l'unité de traitement 65.

**ANNEXE A**

**Calcul des constantes** $\beta_{m_0+p,n_0+q}^{(m_0,n_0)}$ **liées aux fonctions de base de modulation et à la phase**

On présente ci-après une méthode de calcul des constantes réelles $\beta_{m_0+p,n_0+q}^{(m_0,n_0)}$ telles que :

$$\hat{a}_{m_0,n_0}^{(i)} \approx \sum_{p,q\in\Omega_{P,Q}} \Im\left\{\beta_{m_0+p,n_0+q}^{(m_0,n_0)}\right\} a_{m_0+p,n_0+q}^{(r)} \qquad (15)$$

où $\Im\left\{\beta_{m',n'}^{(m,n)}\right\}$ désigne la partie imaginaire de $\beta_{m',n'}^{(m,n)}$.

On rappelle tout d'abord que le signal multiporteuse émis peut s'écrire sous la forme :

$$s(t) = \sum_{n}\sum_{m=0}^{M-1} a_{m,n} \underbrace{g(t-n\tau_0)e^{j2\pi m\nu_0 t}e^{j\phi_{m,n}}}_{g_{m,n}(t)} \qquad (16)$$

Si par ailleurs on suppose que le canal de transmission est parfait (en le prenant par exemple égal à (1), au moins localement, l'estimée des coefficients transmis est donnée par :

$$\hat{a}_{m,n}^{(c)} = \sum_{n',m'} \left[\int f_{m,n}^*(t)g_{m',n'}(t)dt\right] a_{m',n'} \qquad (17)$$

En posant:

$$\beta_{m',n'}^{(m,n)} = \int f_{m,n}^*(t)g_{m',n'}(t)dt \qquad (18),$$

on obtient, pour des fonctions $f$ et $g$ biorthogonales, $\Re\left\{\hat{a}_{m,n}^{(c)}\right\} = a_{m,n}$, soit :

$$\hat{a}_{m,n}^{(c)} = a_{m,n}^{(r)} + j\hat{a}_{m,n}^{(i)} = a_{m,n} + j\Im\left\{\sum_{n',m'}\beta_{m',n'}^{(m,n)}a_{m',n'}\right\} = a_{m,n} + j\sum_{n',m'}\Im\left\{\beta_{m',n'}^{(m,n)}\right\}a_{m',n'}$$

$$(19)$$

Il subsiste donc un terme d'interférence, qu'il est possible d'évaluer pour tout pilote ($a_{m_0,n_0}$) dans un voisinage $P \times Q$ en évaluant $\beta_{m',n'}$.

On remarque aussi que :

$$\hat{a}_{m,n}^{(i)} = \sum_{n',m'}\Im\left\{\beta_{m',n'}^{(m,n)}\right\}a_{m',n'} \qquad (20).$$

En développant l'expression des fonctions de base de modulation et de démodulation, on obtient :

$$\beta_{m',n'}^{(m,n)} = e^{j\left(\phi_{m',n'}-\phi_{m,n}\right)}\int f^*\left(t - n\tau_0\right)g\left(t - n'\tau_0\right)e^{j2\pi(m'-m)v_0 t}dt \qquad (21)$$

Dans un voisinage $P \times Q$ de ($m_0,n_0$), cette équation se réécrit en posant $m = m_0$, $n = n_0$, $m' = m_0 + p$ et $n' = n_0 + q$, ce qui donne :

$$\beta_{m_0+p,n_0+q}^{(m_0,n_0)} = e^{j\left(\phi_{m_0+p,n_0+q}-\phi_{m_0,n_0}\right)}\int f^*\left(t - n_0\tau_0\right)g\left(t - \left(n_0 + p\right)\tau_0\right)e^{j2\pi p v_0 t}dt \quad (22)$$

$$\beta_{m_0+p,n_0+q}^{(m_0,n_0)} = (-1)^{n_0 p}\, e^{j\left(\phi_{m_0+p,n_0+q}-\phi_{m_0,n_0}\right)}\int f^*\left(t\right)g\left(t - p\tau_0\right)e^{j2\pi p v_0 t}dt \qquad (23)$$

On constate donc que les coefficients β s'obtiennent à partir de la fonction d'ambiguïté croisée de f et g (« cross-ambiguïty ») dans le cas biorthogonal, ou tout simplement à partir de la fonction d'ambiguïté de g dans le cas orthogonal.

Pour son évaluation numérique, f et g étant réalisés avec des filtres de longueur finie, ce calcul est plus précis s'il est effectué directement en discret :

$$\beta_{m_0+p,n_0+q}^{(m_0,n_0)} = (-1)^{n_0 p}\, e^{j\left(\phi_{m_0+p,n_0+q}-\phi_{m_0,n_0}\right)}\sum_k f^*[k]g[k - qN]e^{j\frac{2\pi}{2N}p\left(k-\frac{D}{2}\right)} \qquad (24)$$

avec $D = \alpha N - \gamma$ et $M = 2N$.

Pour son implantation côté réception d'un transmultiplexeur, il est préférable de tenir compte du fait que ces coefficients sont à appliquer en prenant en compte un retard de $\alpha$ échantillons.

On présente ci-après deux exemples de détermination des coefficients β, dans le cadre d'une modulation de type OFDM/OQAM présentant une fonction prototype continue réelle et paire.

1. *Phase définit par* $\phi_{m,n} = \dfrac{\pi}{2}\left(n + m\right)$

En posant :

$$\phi_{m,n} = \frac{\pi}{2}(n+m) \qquad\qquad (25),$$

l'équation (22) devient :

$$\beta^{(m_0,n_0)}_{m_0+p,n_0+q} = (-1)^{n_0 p}\, e^{j\frac{\pi}{2}(p+q)} \int g(t)\,g(t-q\tau_0)e^{j2\pi p v_0 t}dt \qquad (26).$$

On introduit ensuite la fonction d'ambiguïté d'une fonction $x$ avec la notation utilisée dans le document de brevet WO 02/25884 précité :

$$A_x(\tau,v) = \int x\!\left(t+\frac{\tau}{2}\right)\cdot x^*\!\left(t-\frac{\tau}{2}\right)e^{-j2\pi vt}dt$$

En effectuant le changement de $t = t' + \dfrac{q\tau_0}{2}$ variable dans l'équation (26), on obtient :

$$\beta^{(m_0,n_0)}_{m_0+p,n_0+q} = (-1)^{n_0 p}\, e^{j\frac{\pi}{2}(p+q)} \int g\!\left(t+\frac{q\tau_0}{2}\right) g\!\left(t-\frac{q\tau_0}{2}\right) e^{j2\pi p v_0\left(t+\frac{q\tau_0}{2}\right)}dt$$

Sachant que $v_0\tau_0 = \dfrac{1}{2}$, on obtient ensuite :

$$\beta^{(m_0,n_0)}_{m_0+p,n_0+q} = -(-1)^{n_0 p}\, e^{j\frac{\pi}{2}((p+q)+pq)} A(q\tau_0, p v_0).$$

Sachant que dans ce cas précis la fonction A est réelle, on peut alors vérifier que le coefficient $\beta_{p,q}$ est un imaginaire pur.

2. *Phrase définie par* $\phi_{m,n} = \dfrac{\pi}{2}(n+m) + \pi nm$

En effectuant le même calcul que précédemment en posant $\phi_{m,n} = \dfrac{\pi}{2}(n+m) + \pi nm$ , on obtient :

$$\beta^{(m_0,n_0)}_{m_0+p,n_0+q} = -(-1)^{m_0 q+pq}\, e^{j\frac{\pi}{2}((p+q)+pq)} A(q\tau_0, p v_0)$$

**Revendications**

1. Procédé de réception d'un signal reçu correspondant à un signal multiporteuse mettant en oeuvre une modulation de type OQAM, émis par au moins un émetteur via un canal de transmission,

ledit signal multiporteuse étant formé d'une succession temporelle de symboles constitués d'un ensemble d'éléments de données comprenant :

- des éléments de données informatifs à valeurs réelles, et
- pour au moins certains desdits symboles, des éléments de données de référence, appelés pilotes, connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse,
**caractérisé en ce que**, des groupes (221) d'au moins deux pilotes (P1, P2) étant localisés chacun dans une région dite de voisinage (22) dans l'espace temps/fréquence, une région de voisinage étant une région dans laquelle ledit canal de transmission est considéré comme sensiblement constant, au moins un desdits groupes comprenant au moins un pilote à valeur réelle et au moins un pilote à valeur imaginaire pure,
ledit procédé de réception comprend, pour au moins une desdites régions de voisinage (22) :

- une étape d'extraction (31) d'au moins deux valeurs complexes correspondant aux pilotes du groupe de ladite région de voisinage, après passage dans ledit canal de transmission,
- une étape d'estimation (33) des parties réelle et imaginaire dudit canal de transmission dans ladite région de voisinage à partir desdites valeurs complexes et de la connaissance des valeurs, réelles ou imaginaires, desdits pilotes du groupe de ladite région de voisinage, avant passage dans ledit canal de transmission.

2. Procédé de réception selon la revendication 1, **caractérisé en ce que** chacun desdits groupes est constitué d'une paire de pilotes.

3. Procédé de réception selon la revendication 2, **caractérisé en ce que** ladite étape d'estimation met en oeuvre une résolution d'un système de quatre équations à quatre inconnues pour chacune desdites paires de pilotes.

4. Procédé de réception selon la revendication 3, **caractérisé en ce que** ledit système met en oeuvre les équations suivantes, pour ledit groupe comprenant au moins un pilote à valeur réelle et au moins un pilote à valeur imaginaire pure :

$$
\begin{cases}
y_{m_0,n_0}^{(r)} & = H_{m_0,n_0}^{(r)} a_{m_0,n_0}^{(r)} - CH_{m_0,n_0}^{(r)} a_{m_0,n_0}^{(i)} \\[2mm]
y_{m_0,n_0}^{(i)} & = CH_{m_0,n_0}^{(r)} a_{m_0,n_0}^{(r)} + H_{m_0,n_0}^{(r)} a_{m_0,n_0}^{(i)} \\[2mm]
y_{m_1,n_1}^{(r)} & = -sign(a_{m_1,n_1}^{(i)})\left(\left|a_{m_1,n_1}^{(r)}\right| + \left|a_{m_1,n_1}^{(i)}\right|\right)CH_{m_1,n_1}^{(r)} \\[2mm]
y_{m_1,n_1}^{(i)} & = sign(a_{m_1,n_1}^{(i)})\left(\left|a_{m_1,n_1}^{(r)}\right| + \left|a_{m_1,n_1}^{(i)}\right|\right)H_{m_1,n_1}^{(r)}
\end{cases}
$$

avec :

- $(m_0,n_0)$ un premier emplacement de l'espace temps/fréquence et $(m_1,n_1)$ un deuxième emplacement de l'espace temps/fréquence dans ladite région de voisinage,

- $y_{m_0,n_0}^{(r)}$ et $y_{m_0,n_0}^{(i)}$ des valeurs réelles égales respectivement à la partie réelle et à la partie imaginaire de la valeur complexe du signal reçu en $(m_0,n_0)$,

- $y_{m_1,n_1}^{(r)}$ et $y_{m_1,n_1}^{(i)}$ des valeurs réelles égales respectivement à la partie réelle et à la partie imaginaire de la valeur complexe de la porteuse située à l'emplacement $(m_1,n_1)$,

- $H_{m_0,n_0}^{(r)}$ la partie réelle de la valeur complexe dudit canal de transmission à l'emplacement $(m_0,n_0)$ et $H_{m_1,n_1}^{(r)}$ la partie réelle de la valeur complexe dudit canal de transmission à l'emplacement $(m_1,n_1)$, avec $H_{m_1,n_1}^{(r)}$ égal à

$H^{(r)}_{m_0,n_0}$, le canal de transmission étant considéré comme sensiblement constant dans ladite région de voisinage,

- $a^{(r)}_{m_0,n_0}$ et $a^{(i)}_{m_0,n_0}$ des valeurs réelles égales respectivement à la partie réelle et à la partie imaginaire de la valeur complexe dudit pilote à valeur réelle du groupe de ladite région de voisinage à l'emplacement $(m_0,n_0)$,

- $a^{(i)}_{m_1,n_1}$ la partie imaginaire de l'interférence induite par lesdits éléments informatifs voisins dudit pilote à valeur imaginaire pure du groupe de ladite région de voisinage à l'emplacement $(m_1,n_1)$,

- $ja^{(r)}_{m_1,n_1}$ la valeur imaginaire reçue dudit pilote à valeur imaginaire pure du groupe de ladite région de voisinage à l'emplacement $(m_1,n_1)$,

- C un réel.

5. Procédé de réception selon l'une quelconque des revendications 1 à 4, **caractérisé en ce que** ladite étape d'estimation met en oeuvre un calcul intermédiaire d'un rapport (32) entre lesdites parties réelle et imaginaire desdites valeurs complexes.

6. Procédé de réception selon l'une quelconque des revendications 1 à 5, **caractérisé en ce qu'**il comprend une étape de suppression d'une interférence intrinsèque induite par ledit pilote à valeur imaginaire pure.

7. Dispositif de réception d'un signal reçu correspondant à un signal multiporteuse mettant en oeuvre une modulation de type OQAM, émis par au moins un émetteur via un canal de transmission,
   ledit signal multiporteuse étant formé d'une succession temporelle de symboles constitués d'un ensemble d'éléments de données comprenant :

   - des éléments de données informatifs à valeurs réelles, et
   - pour au moins certains desdits symboles, des éléments de données de référence, appelés pilotes, connus d'au moins un récepteur destiné à effectuer une réception dudit signal multiporteuse,

   chacun desdits éléments de données modulant une fréquence porteuse dudit signal, une fréquence porteuse modulée par un desdits éléments de données étant appelée porteuse,
   **caractérisé en ce que**, des groupes (221) d'au moins deux pilotes (P1, P2) étant localisés chacun dans une région dite de voisinage (22) dans l'espace temps/fréquence, une région de voisinage étant une région dans laquelle ledit canal de transmission est considéré comme sensiblement constant, au moins un desdits groupes comprenant au moins un pilote à valeur réelle et un pilote à valeur imaginaire pure,
   ledit dispositif de réception comprend, pour au moins une desdites régions de voisinage :

   - des moyens d'extraction (31) d'au moins deux valeurs complexes correspondant aux pilotes du groupe de ladite région de voisinage, après passage dans ledit canal de transmission,
   - des moyens d'estimation (33) des parties réelle et imaginaire dudit canal de transmission dans ladite région de voisinage à partir desdites valeurs complexes et de la connaissance des valeurs, réelles ou imaginaires, desdits pilotes du groupe de ladite région de voisinage, avant passage dans ledit canal de transmission.

8. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de réception selon l'une au moins des revendications 1 à 6.

9. Procédé d'émission d'un signal multiporteuse mettant en oeuvre une modulation de type OQAM, destiné à être transmis via un canal de transmission, formé d'une succession temporelle de symboles constitués d'un ensemble d'éléments de données comprenant :

   - des éléments de données informatifs à valeurs réelles, et
   - pour au moins certains desdits symboles, des éléments de données de référence, appelés pilotes, connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse,

**caractérisé en ce que** ledit procédé d'émission met en oeuvre des groupes (221) d'au moins deux pilotes(P1, P2), localisés chacun dans une région dite de voisinage (22) dans l'espace temps/fréquence, une région de voisinage étant une région dans laquelle ledit canal de transmission est considéré comme sensiblement constant, au moins un desdits groupes comprenant au moins un pilote à valeur réelle et un pilote à valeur imaginaire pure.

**10.** Procédé d'émission selon la revendication 9, **caractérisé en ce que** chacun desdits groupes est constitué d'une paire de pilotes.

**11.** Procédé d'émission selon l'une quelconque des revendications 9 et 10, **caractérisé en ce qu'**il comprend une étape de détermination de la nature desdits pilotes, ladite nature appartenant au groupe comprenant la nature réelle et la nature imaginaire pure.

**12.** Procédé d'émission selon l'une quelconque des revendications 9 à 11, **caractérisé en ce qu'**il comprend une étape de détermination du signe dudit pilote imaginaire.

**13.** Procédé d'émission selon l'une quelconque des revendications 11 et 12, **caractérisé en ce qu'**au moins une desdites étapes de détermination de la nature desdits pilotes et du signe dudit pilote imaginaire dépend de la valeur d'au moins un des éléments de données informatifs voisins de chacun desdits pilotes.

**14.** Procédé d'émission selon les revendications 12 et 13, **caractérisé en ce que** le signe dudit pilote à valeur imaginaire pure est le même que le signe de la valeur d'un terme d'interférence induite par lesdits éléments informatifs voisins dudit pilote sur ledit pilote.

**15.** Dispositif d'émission d'un signal multiporteuse mettant en oeuvre une modulation de type OQAM, destiné à être transmis via un canal de transmission, formé d'une succession temporelle de symboles constitués d'un ensemble d'éléments de données comprenant :

- des éléments de données informatifs à valeurs réelles, et
- pour au moins certains desdits symboles, des éléments de données de référence, appelés pilotes, connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse,

**caractérisé en ce que** ledit dispositif d'émission comprend des moyens de mise en oeuvre de groupes (221) d'au moins deux pilotes (P1, P2), localisés chacun dans une région dite de voisinage (22) dans l'espace temps/fréquence, une région de voisinage étant une région dans laquelle ledit canal de transmission est considéré comme sensiblement constant, au moins un desdits groupes comprenant au moins un pilote à valeur réelle et un pilote à valeur imaginaire pure.

**16.** Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé d'émission selon l'une au moins des revendications 9 à 14.

**17.** Signal multiporteuse mettant en oeuvre une modulation de type OQAM, formé d'une succession temporelle de symboles constitués d'un ensemble d'éléments de données comprenant :

- des éléments de données informatifs à valeurs réelles, et
- pour au moins certains desdits symboles, des éléments de données de référence, appelés pilotes, connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse,

**caractérisé en ce que** ledit ensemble d'éléments de données comprend des groupes (221) d'au moins deux pilotes (P1, P2), localisés chacun dans une région dite de voisinage (22) dans l'espace temps/fréquence, une région de voisinage étant une région dans laquelle ledit canal de transmission est considéré comme sensiblement constant, au moins un desdits groupes étant constitué d'une paire de pilotes comprenant un pilote à valeur réelle et un pilote à valeur imaginaire pure.

**Patentansprüche**

1. Verfahren zum Empfangen eines empfangenen Signals, das einem Mehrfachträgersignal entspricht, das eine Modulation des OQAM-Typs ausführt, das von wenigstens einem Sender über einen Übertragungskanal ausgesendet wird,
wobei das Mehrfachträgersignal aus einer zeitlichen Folge von Symbolen gebildet ist, die aus einer Gesamtheit von Datenelementen gebildet sind, die Folgendes umfassen:

   - Informationsdatenelemente mit reellen Werten und
   - wenigstens für bestimmte der Symbole Referenzdatenelemente, die Pilotelemente genannt werden, die wenigstens einem Empfänger bekannt sind, der dazu bestimmt ist, einen Empfang des Mehrfachträgersignals auszuführen,

   wobei jedes der Datenelemente eine Trägerfrequenz des Signals moduliert, wobei eine durch eines der Datenelemente modulierte Trägerfrequenz Träger genannt wird,
   **dadurch gekennzeichnet, dass** dann, wenn sich in einem so genannten Nachbarschaftsbereich (22) in dem Zeit/Frequenz-Raum jeweils Gruppen (221) aus wenigstens zwei Pilotelementen (P1, P2) befinden, wenn ein Nachbarschaftsbereich ein Bereich ist, in dem der Übertragungskanal als im Wesentlichen konstant angesehen wird, und wenn eine der Gruppen wenigstens ein Pilotelement mit reellem Wert und wenigstens ein Pilotelement mit rein imaginärem Wert enthält,
   das Empfangsverfahren für wenigstens einen der Nachbarschaftsbereiche (22) Folgendes umfasst:

   - einen Schritt (31) des Extrahierens von wenigstens zwei komplexen Werten, die den Pilotelementen der Gruppe in dem Nachbarschaftsbereich entsprechen, nach dem Durchgang durch den Übertragungskanal,
   - einen Schritt (33) des Schätzens der Real-und Imaginärteile des Übertragungskanals in dem Nachbarschaftsbereich anhand der komplexen Werte und der Kenntnis der reellen oder imaginären Werte der Pilotelemente der Gruppe des Nachbarschaftsbereich vor dem Durchgang durch den Übertragungskanal.

2. Empfangsverfahren nach Anspruch 1, **dadurch gekennzeichnet, dass** jede der Gruppen aus einem Paar von Pilotelementen gebildet ist.

3. Empfangsverfahren nach Anspruch 2, **dadurch gekennzeichnet, dass** der Schätzschritt eine Lösung eines Systems aus vier Gleichungen mit vier Unbekannten für jedes der Paare von Pilotelementen erzeugt.

4. Empfangsverfahren nach Anspruch 3, **dadurch gekennzeichnet, dass** das System die folgenden Gleichungen für die Gruppe, die wenigstens ein Pilotelement mit reellem Wert und wenigstens ein Pilotelement mit rein imaginärem Wert enthält, löst:

$$\begin{cases} y_{m_0,n_0}^{(r)} = H_{m_0,n_0}^{(r)} a_{m_0,n_0}^{(r)} - CH_{m_0,n_0}^{(r)} a_{m_0,n_0}^{(i)} \\ y_{m_0,n_0}^{(i)} = CH_{m_0,n_0}^{(r)} a_{m_0,n_0}^{(r)} + H_{m_0,n_0}^{(r)} a_{m_0,n_0}^{(i)} \\ y_{m_1,n_1}^{(r)} = -sign(a_{m_1,n_1}^{(i)})(\left|a_{m_1,n_1}^{(r)}\right| + \left|a_{m_1,n_1}^{(i)}\right|)CH_{m_1,n_1}^{(r)} \\ y_{m_1,n_1}^{(i)} = sign(a_{m_1,n_1}^{(i)})(\left|a_{m_1,n_1}^{(r)}\right| + \left|a_{m_1,n_1}^{(i)}\right|)H_{m_1,n_1}^{(r)} \end{cases}$$

wobei:

- $(m_0,n_0)$ ein erster Ort des Zeit/Frequenz-Raums ist und $(m_1,n_1)$ ein zweiter Ort des Zeit/Frequenz-Raums in dem Nachbarschaftsbereich sind,

- $y_{m_0,n_0}^{(r)}$ und $y_{m_0,n_0}^{(i)}$ reelle Werte sind, die gleich dem Realteil bzw. dem Imaginärteil des komplexen Wertes des empfangenen Signals bei $(m_0,n_0)$ sind,

- $y_{m_1,n_1}^{(r)}$ und $y_{m_1,n_1}^{(i)}$ reelle Werte sind, die gleich dem Realteil bzw. dem Imaginärteil des komplexen Wertes des Trägers, der sich an dem Ort $(m_1,n_1)$ befindet, sind,

- $H_{m_0,n_0}^{(r)}$ der Realteil des komplexen Wertes des Übertragungskanals am Ort $(m_0,n_0)$ ist und $H_{m_1,n_1}^{(r)}$ der Realteil des komplexen Wertes des Übertragungssignals am Ort $(m_1,n_1)$ ist, wobei $H_{m_1,n_1}^{(r)}$ gleich $H_{m_0,n_0}^{(r)}$ ist, wobei der Übertragungskanal in dem Nachbarschaftsbereich als im Wesentlichen konstant angesehen wird,

- $a_{m_0,n_0}^{(r)}$ und $a_{m_0,n_0}^{(i)}$ reelle Werte sind, die gleich dem Realteil bzw. dem Imaginärteil des komplexen Wertes des Pilotelements mit reellem Wert der Gruppe des Nachbarschaftsbereich am Ort $(m_0,n_0)$ sind,

- $a_{m_1,n_1}^{(i)}$ der Imaginärteil der durch die benachbarten Informationselemente des Pilotelements mit rein imaginärem Wert der Gruppe des Nachbarschaftsbereichs am Ort $(m_1,n_1)$ eingeführte Störung ist,

- $ja_{m_1,n_1}^{(r)}$ der empfangene imaginäre Wert des Pilotelements mit rein imaginärem Wert der Gruppe des Nachbarschaftsbereichs am Ort $(m_1,n_1)$ ist,
- C eine reelle Zahl ist.

5. Empfangsverfahren nach einem der Ansprüche 1 bis 4, **dadurch gekennzeichnet, dass** der Schätzschritt eine Zwischenrechnung eines Verhältnisses (32) zwischen den Real- und Imaginärteilen der komplexen Werte ausführt.

6. Empfangsverfahren nach einem der Ansprüche 1 bis 5, **dadurch gekennzeichnet, dass** es einen Schritt des Unterdrückens einer intrinsischen Störung, die durch das Pilotelement mit rein imaginärem Wert eingeführt wird, umfasst.

7. Vorrichtung zum Empfangen eines empfangenen Signals, das einem Mehrfachträgersignal entspricht, das eine Modulation des OQAM-Typs ausführt, das von wenigstens einem Sender über einen Übertragungskanal ausgesendet wird,
wobei das Mehrfachträgersignal aus einer zeitlichen Folge von Symbolen gebildet ist, die aus einer Gesamtheit von Datenelementen gebildet sind, die Folgendes umfassen:

- Informationsdatenelemente mit reellen Werten und
- wenigstens für bestimmte der Symbole Referenzdatenelemente, die Pilotelemente genannt werden, die wenigstens einem Empfänger bekannt sind, der dazu bestimmt ist, einen Empfang des Mehrfachträgersignals auszuführen,

wobei jedes der Datenelemente eine Trägerfrequenz des Signals moduliert, wobei eine durch eines der Datenelemente modulierte Trägerfrequenz Träger genannt wird,
**dadurch gekennzeichnet, dass** dann, wenn Gruppen (221) aus wenigstens zwei Pilotelementen (P1, P2) jeweils in einem Nachbarschaftsbereich (22) in dem Zeit/Frequenz-Bereich vorhanden sind, wenn ein Nachbarschaftsbereich ein Bereich ist, in dem der Übertragungskanal als im Wesentlichen konstant angesehen wird, und wenn wenigstens eine der Gruppen wenigstens ein Pilotelement mit reellem Wert und ein Pilotelement mit rein imaginärem Wert enthält,
die Empfangsvorrichtung für wenigstens einen der Nachbarschaftsbereiche Folgendes umfasst:

- Mittel (31) zum Extrahieren von wenigstens zwei komplexen Werten, die den Pilotelementen der Gruppe des Nachbarschaftsbereichs entsprechen, nach dem Durchgang durch den Übertragungskanal,
- Mittel (33) zum Schätzen des Realteils und des Imaginärteils des Übertragungskanals in dem Nachbarschaftsbereich anhand der komplexen Werte und der Kenntnis der reellen oder imaginären Werte der Pilotelemente der Gruppe des Nachbarschaftsbereichs vor dem Durchgang durch den Übertragungskanal.

8. Computerprogrammprodukt, das von einem Kommunikationsnetz fernladbar ist und/oder in einem durch einen Computer lesbaren Träger aufgezeichnet ist und/oder durch einen Prozessor ausführbar ist, **dadurch gekennzeichnet, dass** es Programmcodebefehle für die Ausführung des Empfangsverfahrens nach wenigstens einem der Ansprüche 1 bis 6 umfasst.

9. Verfahren zum Aussenden eines Mehrfachträgersignals, das eine Modulation des OQAM-Typs ausführt, das dazu bestimmt ist, über einen Übertragungskanal gesendet zu werden, und aus einer zeitlichen Folge von Symbolen gebildet ist, die aus einer Gesamtheit von Datenelementen gebildet ist, die Folgendes umfassen:

- Informationsdatenelemente mit reellen Werten und
- wenigstens für bestimmte der Symbole Referenzdatenelemente, die Pilotelemente genannt werden, die wenigstens einem Empfänger bekannt sind, der dazu bestimmt ist, einen Empfang des Mehrfachträgersignals auszuführen,

wobei die Datenelemente eine Trägerfrequenz des Signals modulieren, wobei eine durch eines der Datenelemente modulierte Trägerfrequenz Träger genannt wird,
**dadurch gekennzeichnet, dass** das Sendeverfahren Gruppen (221) aus wenigstens zwei Pilotelementen (P1, P2) verwendet, die sich jeweils in einem so genannten Nachbarschaftsbereich (22) in dem Zeit/Frequenz-Bereich befinden, wobei ein Nachbarschaftsbereich ein Bereich ist, in dem der Übertragungskanal als im Wesentlichen konstant angesehen wird, und wobei wenigstens eine der Gruppen wenigstens ein Pilotelement mit reellem Wert und ein Pilotelement mit rein imaginärem Wert enthält.

10. Sendeverfahren nach Anspruch 9, **dadurch gekennzeichnet, dass** jede der Gruppen aus einem Paar von Pilotelementen gebildet ist.

11. Sendeverfahren nach einem der Ansprüche 9 und 10, **dadurch gekennzeichnet, dass** es einen Schritt des Bestimmens des Typs der Pilotelemente umfasst, wobei r Typ zu der Gruppe gehört, die den reellen Typ und den rein imaginären Typ umfasst.

12. Sendeverfahren nach einem der Ansprüche 9 bis 11, **dadurch gekennzeichnet, dass** es einen Schritt des Bestimmens des Vorzeichens des imaginären Pilotelements umfasst.

13. Sendeverfahren nach einem der Ansprüche 11 und 12, **dadurch gekennzeichnet, dass** wenigstens einer der Schritte des Bestimmens des Typs der Pilotelemente und des Vorzeichens des imaginären Pilotelements von dem Wert wenigstens eines der benachbarten Informationsdatenelemente jedes der Pilotelemente abhängt.

14. Sendeverfahren nach den Ansprüchen 12 und 13, **dadurch gekennzeichnet, dass** das Vorzeichen des Pilotelements mit rein imaginärem Wert gleich dem Vorzeichen des Werts eines Störungsterms ist, der durch die benachbarten Informationselemente des Pilotelements in das Pilotelement eingeführt wird.

15. Vorrichtung zum Senden eines Mehrfachträgersignals, das eine Modulation des OQAM-Typs ausführt, das dazu bestimmt ist, über einen Übertragungskanal gesendet zu werden, das aus einer zeitlichen Folge von Symbolen gebildet ist, die aus einer Gesamtheit von Datenelementen gebildet sind, die Folgendes umfassen:

- Informationsdatenelemente mit reellen Werten und
- wenigstens für bestimmte der Symbole Referenzdatenelemente, die Pilotelemente genannt werden, die wenigstens einem Empfänger bekannt sind, der dazu bestimmt ist, einen Empfang des Mehrfachträgersignals auszuführen,

wobei jedes der Datenelemente eine Trägerfrequenz des Signals moduliert, wobei eine durch eines der Datenelemente modulierte Trägerfrequenz Träger genannt wird,
**dadurch gekennzeichnet, dass** die Sendevorrichtung Mittel zum Verwenden von Gruppen (221) aus wenigstens zwei Pilotelementen (P1, P2) umfasst, die sich jeweils in einem Nachbarschaftsbereich (22) in dem Zeit/Frequenz-Raum befinden, wobei ein Nachbarschaftsbereich ein Bereich ist, in dem der Übertragungskanal als im Wesentlichen konstant angesehen wird, und wobei wenigstens eine der Gruppen wenigstens ein Pilotelement mit reellem Wert und ein Pilotelement mit reinem imaginären Wert enthält.

**16.** Computerprogrammprodukt, das von einem Kommunikationsnetz fernladbar ist und/oder in einem durch einen Computer lesbaren Träger aufgezeichnet ist und/oder durch einen Prozessor ausführbar ist, **dadurch gekennzeichnet, dass** es Programmcodebefehle für die Ausführung des Sendeverfahrens nach wenigstens einem der Ansprüche 9 bis 14 umfasst.

**17.** Mehrfachträgersignal, das eine Modulation des OQAM-Typs ausführt und aus einer zeitlichen Folge von Symbolen gebildet ist, die aus einer Gesamtheit von Datenelementen gebildet sind, die Folgendes umfassen:

- Informationsdatenelemente mit reellen Werten und
- wenigstens für bestimmte der Symbole Referenzdatenelemente, die Pilotelemente genannt werden, die wenigstens einem Empfänger bekannt sind, der dazu bestimmt ist, einen Empfang des Mehrfachträgersignals auszuführen,

wobei jedes der Datenelemente eine Trägerfrequenz des Signals moduliert, wobei eine durch eines der Datenelemente modulierte Trägerfrequenz Träger genannt wird,
**dadurch gekennzeichnet, dass** die Gesamtheit von Datenelementen Gruppen (221) aus wenigstens zwei Pilotelementen (P1, P2) umfasst, die sich jeweils in einem so genannten Nachbarschaftsbereich (22) in dem Zeit/Frequenz-Raum befinden, wobei ein Nachbarschaftsbereich ein Bereich ist, in dem der Übertragungskanal als im Wesentlichen konstant angesehen wird, und wobei wenigstens eine der Gruppen aus einem Paar von Pilotelementen gebildet ist, das ein Pilotelement mit reellem Wert und ein Pilotelement mit rein imaginärem Wert enthält.

**Claims**

**1.** Method for receiving a received signal corresponding to a multicarrier signal implementing a modulation of OQAM type, transmitted by at least one transmitter over a transmission channel,
said multicarrier signal being formed by a temporal succession of symbols composed of a set of data elements comprising:

- informational data elements with real values, and
- for at least certain of said symbols, reference data elements, called pilots, known to at least one receiver intended to perform a reception of said multicarrier signal,

each of said data elements modulating a carrier frequency of said signal, a carrier frequency modulated by one of said data elements being called a carrier, **characterized in that**, groups (221) of at least two pilots (P1, P2) being each located in a so-called neighbouring region (22) in the time/frequency space, a neighbouring region being a region in which said transmission channel is considered as substantially constant, at least one of said groups comprising at least one pilot with a real value and at least one pilot with a pure imaginary value,
said reception method comprises, for at least one of said neighbouring regions (22):

- a step (31) of extracting at least two complex values corresponding to the pilots of the group of said neighbouring region, after passing through said transmission channel,
- a step (33) of estimating the real and imaginary parts of said transmission channel in said neighbouring region on the basis of said complex values and of the knowledge of the values, real or imaginary, of said pilots of the group of said neighbouring region, before passing through said transmission channel.

**2.** Reception method according to Claim 1, **characterized in that** each of said groups is composed of a pair of pilots.

**3.** Reception method according to Claim 2, **characterized in that** said estimating step implements a solving of a system of four equations with four unknowns for each of said pairs of pilots.

**4.** Reception method according to Claim 3, **characterized in that** said system implements the following equations, for said group comprising at least one pilot with a real value and at least one pilot with a pure imaginary value:

$$\begin{cases} y^{(r)}_{m_0,n_0} = H^{(r)}_{m_0,n_0} a^{(r)}_{m_0,n_0} - CH^{(r)}_{m_0,n_0} a^{(i)}_{m_0,n_0} \\ y^{(i)}_{m_0,n_0} = CH^{(r)}_{m_0,n_0} a^{(r)}_{m_0,n_0} + H^{(r)}_{m_0,n_0} a^{(i)}_{m_0,n_0} \\ y^{(r)}_{m_1,n_1} = -sign(a^{(i)}_{m_1,n_1})(|a^{(r)}_{m_1,n_1}| + |a^{(i)}_{m_1,n_1}|)CH^{(r)}_{m_1,n_1} \\ y^{(i)}_{m_1,n_1} = sign(a^{(i)}_{m_1,n_1})(|a^{(r)}_{m_1,n_1}| + |a^{(i)}_{m_1,n_1}|)H^{(r)}_{m_1,n_1} \end{cases}$$

with:

- $(m_0, n_0)$ a first site of the time/frequency space and $(m_1,n_1)$ a second site of the time/frequency space in said neighbouring region

- $y^{(r)}_{m_0,n_0}$ and $y^{(i)}_{m_0,n_0}$ real values equal to the real part and to the imaginary part of the complex value of the signal received at the site $(m_0, n_0)$ respectively

- $y^{(r)}_{m_1,n_1}$ and $y^{(i)}_{m_1,n_1}$ real values equal to the real part and to the imaginary part of the complex value of the carrier situated at the site $(m_1, n_1)$ respectively,

- $H^{(r)}_{m_0,n_0}$ the real part of the complex value of said transmission channel at the site $(m_0,n_0)$ and

$H^{(r)}_{m_1,n_1}$ the real part of the complex value of said transmission channel at the site $(m_1,n_1)$ with $H^{(r)}_{m_1,n_1}$ equal

to $H^{(r)}_{m_0,n_0}$, the transmission channel being considered as substantially constant in said neighbouring region,

- $a^{(r)}_{m_0,n_0}$ and $a^{(i)}_{m_0,n_0}$ real values equal to the real part and to the imaginary part of the complex value of said pilot with a real value of the group of said neighbouring region at the site $(m_0,n_0)$,

- $a^{(i)}_{m_1,n_1}$ the imaginary part of the interference induced by said neighbouring informational elements of said pilot with a pure imaginary value of the group of said neighbouring region at the site $(m_1,n_1)$,

- $ja^{(r)}_{m_1,n_1}$ the imaginary value received from said pilot with a pure imaginary value of the group of said neighbouring region at the site $(m_1, n_1)$,
- C a real number.

5. Reception method according to any one of Claims 1 to 4, **characterized in that** said estimating step implements an intermediate calculation of a ratio (32) of said real to said imaginary parts of said complex values.

6. Reception method according to any one of Claims 1 to 5, **characterized in that** it comprises a step of removing an intrinsic interference induced by said pilot with a pure imaginary value.

7. Device for receiving a received signal corresponding to a multicarrier signal implementing a modulation of OQAM type, transmitted by at least one transmitter over a transmission channel,
said multicarrier signal being formed by a temporal succession of symbols composed of a set of data elements comprising:

   - informational data elements with real values, and

- for at least certain of said symbols, reference data elements, called pilots, known to at least one receiver intended to perform a reception of said multicarrier signal,

each of said data elements modulating a carrier frequency of said signal, a carrier frequency modulated by one of said data elements being called a carrier, **characterized in that**, groups (221) of at least two pilots (P1, P2) being each located in a so-called neighbouring region (22) in the time/frequency space, a neighbouring region being a region in which said transmission channel is considered as substantially constant, at least one of said groups comprising at least one pilot with a real value and one pilot with a pure imaginary value,

said reception device comprises, for at least one of said neighbouring regions,

- means (31) for extracting at least two complex values corresponding to the pilots of the group of said neighbouring region, after passing through said transmission channel,
- means (33) for estimating the real and imaginary parts of said transmission channel in said neighbouring region on the basis of said complex values and of the knowledge of the values, real or imaginary, of said pilots of the group of said neighbouring region, before passing through said transmission channel.

8. Computer program product downloadable from a communication network and/or stored on a medium readable by a computer and/or executable by a processor, **characterized in that** it comprises program code instructions for implementing the reception method according to at least one of Claims 1 to 6.

9. Method for transmitting a multicarrier signal implementing a modulation of OQAM type, intended to be transmitted over a transmission channel, formed by a temporal succession of symbols composed of a set of data elements comprising:

- informational data elements with real values, and
- for at least certain of said symbols, reference data elements, called pilots, known to at least one receiver intended to perform a reception of said multicarrier signal,

each of said data elements modulating a carrier frequency of said signal, a carrier frequency modulated by one of said data elements being called a carrier, **characterized in that** said transmitting method implements groups (221) of at least two pilots (P1, P2), each located in a so-called neighbouring region (22) in the time/frequency space, a neighbouring region being a region in which said transmission channel is considered as substantially constant, at least one of said groups comprising at least one pilot with a real value and one pilot with a pure imaginary value.

10. Transmitting method according to Claim 9, **characterized in that** each of said groups is composed of a pair of pilots.

11. Transmitting method according to either one of Claims 9 or 10, **characterized in that** it comprises a step of determining the nature of said pilots, said nature belonging to the group comprising the real nature and the pure imaginary nature.

12. Transmitting method according to any one of Claims 9 to 11, **characterized in that** it comprises a step of determining the sign of said imaginary pilot.

13. Transmitting method according to either one of Claims 11 and 12, **characterized in that** at least one of said steps of determining the nature of said pilots and of the sign of said imaginary pilot depends on the value of at least one of the neighbouring informational data elements of each of said pilots.

14. Transmitting method according to Claims 12 and 13, **characterized in that** the sign of said pilot with a pure imaginary value is the same as the sign of the value of a term of interference induced by said neighbouring informational elements of said pilot on said pilot.

15. Device for transmitting a multicarrier signal implementing a modulation of OQAM type, intended to be transmitted over a transmission channel, formed by a temporal succession of symbols composed of a set of data elements comprising:

- informational data elements with real values, and
- for at least certain of said symbols, reference data elements, called pilots, known to at least one receiver intended to perform a reception of said multicarrier signal,

each of said data elements modulating a carrier frequency of said signal, a carrier frequency modulated by one of said data elements being called a carrier, **characterized in that** said transmitting device comprises means for implementing groups (221) of at least two pilots (P1, P2), each located in a so-called neighbouring region (22) in the time/frequency space, a neighbouring region being a region in which said transmission channel is considered as substantially constant, at least one of said groups comprising at least one pilot with a real value and at least one pilot with a pure imaginary value.

16. Computer program product downloadable from a communication network and/or stored on a medium readable by a computer and/or executable by a processor, **characterized in that** it comprises program code instructions for implementing the transmitting method according to at least one of Claims 9 to 14.

17. Multicarrier signal implementing a modulation of OQAM type, formed by a temporal succession of symbols composed of a set of data elements comprising:

- informational data elements with real values, and
- for at least certain of said symbols, reference data elements, called pilots, known to at least one receiver intended to perform a reception of said multicarrier signal,

each of said data elements modulating a carrier frequency of said signal, a carrier frequency modulated by one of said data elements being called a carrier, **characterized in that** said set of data elements comprises groups (221) of at least two pilots (P1, P2), each located in a so-called neighbouring region (22) in the time/frequency space, a neighbouring region being a region in which said transmission channel is considered as substantially constant, at least one of said groups being composed of a pair of pilots comprising one pilot with a real value and one pilot with a pure imaginary value.

Fig. 1 (Art antérieur)

$\tau_0$

$2 \times \tau_0 = Tu$

$\upsilon_0$

Fig. 2A

Fig. 2B

Fig. 2C

code

t

f

P9

P10

Fig. 3

y(t)

31

32

33

Fig. 4

Fig. 5

Fig. 6A

Fig. 6B

## RÉFÉRENCES CITÉES DANS LA DESCRIPTION

### Documents brevets cités dans la description

- WO 0225884 A
- WO 0225883 A
- FR 2733869